# EUROPÄISCHE PATENTSCHRIFT

(11) **EP 4 146 520 B1**
(45) Veröffentlichungstag und Bekanntmachung des Hinweises auf die Patenterteilung: **18.09.2024**
(21) Anmeldenummer: 21725053.9
(22) Anmeldetag: 04.05.2021
(51) Int. Cl.: B62D 1/181, B62D 1/185

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 07.05.2020 DE 102020205728; 07.05.2020 DE 102020205731
(43) Veröffentlichungstag der Anmeldung: 15.03.2023
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); BLÄTTLER, Simon, 9472 Grabs (CH); KREUTZ, Daniel, 6800 Feldkirch (AT); HUBER, Sebastian, 6811 Göfis (AT)
(74) Vertreter: thyssenkrupp Intellectual Property GmbH
(86) Internationale Anmeldenummer: PCT/EP2021/061608
(87) Internationale Veröffentlichungsnummer: WO 2021/224200

(56) Entgegenhaltungen:
- WO-A1-2020/007723
- WO-A1-2020/007723
- WO-A1-2020/245001
- WO-A1-2020/245001
- DE-A1- 102017 221 004
- DE-A1- 102017 221 004
- DE-A1- 102019 114 991
- US-A1- 2017 305 454

## Beschreibung

### Stand der Technik

Die Erfindung betrifft eine Lenksäule für ein Kraftfahrzeug, umfassend eine Manteleinheit, in der eine Lenkspindel um eine in Längsrichtung erstreckte Längsachse drehbar gelagert ist, wobei die Manteleinheit mindestens zwei in Längsrichtung relativ zueinander verstellbare, teleskopartig geführte Mantelrohre aufweist, wobei zwischen den Mantelrohren ein in Längsrichtung verlagerbares Zwischenelement angeordnet ist, und die eine Positioniereinrichtung zur Positionierung des Zwischenelements relativ zu den Mantelrohren in Längsrichtung aufweist.

Eine Lenksäule für ein Kraftfahrzeug weist eine Lenkwelle mit einer in einer Manteleinheit um ihre Längsachse drehbar gelagerten Lenkspindel auf, an deren in Fahrtrichtung hinteren, dem Fahrer zugewandten Ende ein Lenkrad zur Einbringung eines Lenkbefehls durch den Fahrer angebracht ist. Die Manteleinheit wird von einer an der Fahrzeugkarosserie befestigten Trageinheit gehalten, wobei durch eine Verstellung der Manteleinheit relativ zur Trageinheit die Einstellung der Lenkradposition relativ zur Fahrzeugkarosserie ermöglicht wird.

Eine Längsverstellung, bei der das Lenkrad in Längsrichtung, d. h. in Richtung der Längsachse oder in Achsrichtung der Längsachse relativ zur Fahrerposition nach hinten oder nach vorn verstellt werden kann, wird bei einer gattungsgemäßen Lenksäule durch eine teleskopartige Ausgestaltung der Manteleinheit und der Lenkspindel ermöglicht. Außerdem kann die Lenksäule im Fall eines Crashs in Längsrichtung zusammengeschoben werden, wodurch wirksam verhindert wird, dass die Lenksäule in das Innere der Fahrgastzelle eindringt und zu Verletzungen der Insassen führt.

Die Manteleinheit weist mindestens zwei Mantelrohre auf, mit mindestens einem inneren Mantelrohr, auch als Innenmantelrohr oder Innenmantel bezeichnet, welches koaxial in mindestens ein äußeres Mantelrohr, auch als Außenmantelrohr oder Außenmantel bezeichnet, eintaucht, und in der durch die Richtung der Längsachse vorgegebenen Längsrichtung teleskopierbar in diesem geführt ist. Durch teleskopierendes Zusammenschieben oder Ausziehen der Mantelrohre in Längsrichtung kann die Manteleinheit und damit die Lenksäule entsprechend verkürzt oder verlängert werden.

Es sind Bauformen von Manteleinheiten bekannt, die denen zwischen dem Außenmantelrohr und dem Innenmantelrohr ein oder mehrere Zwischenelemente angeordnet sind, die bezüglich der Mantelrohre in Längsrichtung verlagerbar angeordnet sind. Anders ausgedrückt befinden sich das Außenmantelrohr und das Innenmantelrohr am vorderen oder hinteren Ende der Manteleinheit, oder umgekehrt.

Beispielsweise kann ein Mehrfachteleskop für einen vergrößerten Verstellbereich aus drei oder mehr Mantelrohren gebildet werden, wobei koaxial zwischen dem Innenmantelrohr und dem Außenmantelrohr mindestens ein zusätzliches Zwischenmantelrohr teleskopierbar angeordnet ist, welches ein gattungsgemäßes Zwischenelement bilden kann. Ein derartiges Mehrfachteleskop ist im Stand der Technik beispielsweise in der DE 10 2017 221 004 A1 beschrieben.

Es ist ebenfalls bekannt, dass zwischen zwei benachbarten Mantelrohren koaxial eine Gleitoder Wälzlagereinheit angeordnet ist. Eine derartige Wälzlagereinheit, die beispielsweise in der DE 10 2017 221 004 A1 beschrieben ist, umfasst einen koaxial zu den Mantelrohren angeordneten Wälzkörperkäfig, in dem Wälzkörper wie Kugeln oder Rollen gelagert sind, die zwischen den Mantelrohren abwälzbar sind. Dadurch wird eine lineare Wälzlagerung gebildet, die eine leichtgängige Verstellung und eine spielarme, biegesteife Abstützung ermöglicht. Alternativ kann eine lineare Gleiteinheit vorgesehen sein, die beispielsweise als Gleithülse koaxial zwischen den Mantelrohren angebracht ist. Eine derartige Wälzlagereinheit oder Gleiteinheit, die zwischen Außen-, Innen- und/oder Zwischenmantelrohren angeordnet sein kann, ist ebenfalls teleskoperbar relativ zu mindestens einem Mantelrohr und kann somit ein gattungsgemäßes Zwischenelement bilden.

Die Wälzkörper sind dabei durch die Roll- und Gleitreibung zwischen den Mantelrohren gehalten, so dass die Wälzlagereinheit bei einer Verstellung der Mantelrohre in Verstellrichtung mitgenommen wird. Durch Schlupf zwischen den Wälzkörpern und den Mantelrohren kann die Wälzlagereinheit jedoch undefiniert rutschen und relativ zu den Mantelrohren wandern, so dass insbesondere nach wiederholtem Verstellen der Lenksäule die Wälzlagereinheit in derselben Einstellung der Lenksäule unterschiedliche Positionen in Achsrichtung relativ zu den Mantelrohren einnehmen kann. Nachteilig dabei ist, dass die Manteleinheit in derselben Einstellposition je nach Position der Wälzlagereinheit eine unterschiedliche Steifigkeit haben kann. Außerdem kann die erforderliche Verstellkraft in nachteiliger Weise ansteigen, wenn die Wälzlagereinheit wandert und vor Erreichen einer Endposition bei der Verstellung der Mantelrohre an einem Endanschlag anschlägt und gestoppt wird, so dass die Wälzkörper beim weiteren Verstellen nicht mehr abrollen können. Bei einer Gleiteinheit kann ebenfalls relativ zu den Mantelrohren durchrutschen und dadurch undefiniert positioniert werden.

Ein vergleichbares Problem kann bei einem Zwischenmantelrohr eines Mehrfachteleskops auftreten. Dieses wird beim teleskopierenden Verstellen zwischen Außen- und Innenmantelrohr durch Reibung in Längsrichtung mitgenommen, und kann sich in Zwischenstellungen relativ zum Außen- oder Innenmantelrohr undefiniert in Längsrichtung bewegen, so dass es in derselben Einstellung der Lenksäule unterschiedliche Längspositionen relativ zu den Mantelrohren einnehmen kann. Dadurch kann ebenfalls die Steifigkeit der Lenksäule beeinträchtigt werden.

In der DE 10 2015 216 326 A1 wird eine Rastvorrichtung vorgeschlagen, mit der das Zwischenmantelrohr und das Innenmantel lösbar miteinander koppelbar sind, um diese in einer vorbestimmten Position zueinander zu halten. Nachteil dieser Lösung ist jedoch, dass im ausgerasteten Zustand der Zwischenmantel frei gegenüber dem Innenmantel bewegbar ist, so dass die Mantelrohre erst vollständig zusammengefahren werden müssen, damit die Rastvorrichtung in den eingerasteten Zustand überführt werden kann.

Angesichts der vorangehend erläuterten Problematik ist es eine Aufgabe der vorliegenden Erfindung, eine verbesserte Positioniereinrichtung für ein Zwischenelement zur Verfügung zu stellen.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine Manteleinheit, in der eine Lenkspindel um eine in Längsrichtung erstreckte Längsachse drehbar gelagert ist, wobei die Manteleinheit mindestens zwei in Längsrichtung relativ zueinander verstellbare, teleskopartig geführte Mantelrohre aufweist, wobei zwischen den Mantelrohren ein in Längsrichtung verlagerbares Zwischenelement angeordnet ist, und die eine Positioniereinrichtung zur Positionierung der Zwischenelements relativ zu den Mantelrohren in Längsrichtung aufweist, ist erfindungsgemäß vorgesehen, dass die Positioniereinrichtung langgestreckte Führungsbahnen umfasst, die an den Mantelrohren und dem Zwischenelement angeordnet sind und derart miteinander zusammenwirken, dass diese die Mantelrohre und das Zwischenelement relativ zueinander definiert positionieren.

Die Führungsbahnen sind eingerichtet und ausgestaltet, so dass sie eine zwischen den Mantelrohren bezüglich einer relativen Bewegung in Längsrichtung wirksame Zwangsführung bilden, so dass die Mantelrohre und das Zwischenelement in Längsrichtung relativ zueinander definiert positioniert werden.

Die erfindungsgemäße Positioniereinrichtung weist eine Anordnung von miteinander zusammenwirkenden mechanischen Zwangsführungen auf, durch die die einzelnen Teleskopelemente, welche die Mantelrohre und das mindestens eine Zwischenelement umfassen, in jedem Verstellzustand der Teleskopanordnung in Längsrichtung eindeutig relativ zueinander positioniert sind. Mit anderen Worten kann die Relativbewegung der Teleskopelemente beim Auseinanderziehen oder Zusammenschieben synchronisiert werden. Die langgestreckten Führungsbahnen können gleichbedeutend als Führungsbahnelemente oder Führungskulissen bezeichnet werden.

Eine Führungsbahn kann beispielsweise eine langgestreckte Vertiefung oder Öffnung, wie beispielsweise eine Führungsnut, einen Führungsschlitz oder dergleichen aufweisen, oder alternativ oder zusätzlich einen langgestreckten Vorsprung, wie beispielsweise einen Führungssteg, eine Führungsschiene oder -sicke oder dergleichen.

In einer vorteilhaften Weiterbildung kann es vorgesehen sein, dass die Führungsbahnen relativ zueinander und relativ zur Längsachse geneigt verlaufen.

In einer weiteren vorteilhaften Weiterbildung kann an den Führungsbahnen mindestens ein Führungskörper derart geführt sein, so dass er die Mantelrohre und das Zwischenelement relativ zueinander definiert positioniert.

Der Führungskörper ist an der Führungsbahn in Richtung ihrer Längserstreckung zwangsgeführt, so dass eine Art Kulissenführung gebildet sein kann, bei welcher der Führungskörper an oder in der Führungsbahn geführt entlangbewegt werden kann, beispielsweise entlanggleiten kann. Beispielsweise kann der Führungskörper einen Führungsvorsprung, wie einen Führungszapfen, -stift oder dergleichen aufweisen, der derart in eine korrespondierende Führungsnut oder einen Führungsschlitz eingreift, dass er darin quer zur Längserstreckung formschlüssig gehalten ist, und in Richtung der Längserstreckung zwangsgeführt entlangbewegt werden kann. Alternativ oder zusätzlich kann der Führungskörper eine Vertiefung aufweisen, in die entsprechend ein Vorsprung der Führungsbahn eingreifen kann.

Jede Führungsbahn an einem Teleskopelement, also einem Mantelrohr oder einem Zwischenelement, ist geneigt, d.h. nichtparallel, in einem relativen Winkel größer als 0° und kleiner als 180°, bezüglich der Längsachse und bezüglich einer Führungsbahn an einem anderen Teleskopelement ausgerichtet. Dabei kann eine Führungsbahn einen geraden oder gebogenen Verlauf haben. Bei einem mehreckigen Querschnitt von Mantelrohr oder Zwischenelement kann eine Führungsbahn an einer im Wesentlichen ebenen Seitenfläche angeordnet oder ausgebildet sein, so dass sie sich entsprechend parallel zu einer Längsebene erstreckt, die parallel zur Längsachse ist. Bei einem runden Querschnitt kann die Führungsbahn schraubenförmig mit einer durch die Neigung vorgegebenen Steigung ausgebildet sein.

Dadurch, dass der Führungskörper gleichzeitig in die korrespondierenden Führungsbahnen der Mantelrohre und des Zwischenelements eingreift und geführt ist, also an mindestens drei Führungsbahnen zwangsgeführt ist, wird eine Zwangskopplung erzeugt zwischen sämtlichen Mantelrohren und Zwischenelementen. Auf diese Weise sind nur bedingte relative Positionierungen der Mantelrohre und des Zwischenelements zueinander ermöglicht, welche durch die Zwangsführung erlaubt werden. Die gekoppelten oder synchronisierten Bewegungsbahnen werden dabei bestimmt durch die möglichen gemeinsamen Positionierungen sämtlicher Zwangsführungen zwischen den Teleskopelementen. Durch die unterschiedliche Neigung wird für jeden Verstellzustand der Manteleinheit in Längsrichtung eine eindeutige relative Positionierung der Mantelrohre und des Zwischenelements definiert. Daraus ergibt sich der Vorteil einer definierten, gleichbleibenden Steifigkeit der Manteleinheit.

Ein besonderer Vorteil der Erfindung ist, dass die aus Führungsbahnen und Führungskörper gebildete Kulissenführung mit geringem Fertigungs- und Montageaufwand realisierbar ist, einfach aufgebaut und zuverlässig im Betrieb ist.

Ein weiterer Vorteil ist, dass die Führungsbahnen raumsparend ausgebildet sein können, beispielsweise als Führungsnuten oder Führungsschlitze, welche bevorzugt einstückig, direkt in die Mantelrohre eingeformt und integriert werden können. Vorstehende Führungsvorsprünge, -stege, -sicken oder dergleichen können ebenfalls raumsparend ausgebildet und einstückig angeformt sein, beispielsweise durch plastische Umformung der Wandungen von Mantelrohren und Zwischenelementen. Dadurch ist die erfindungsgemäße Positioniereinrichtung besonders geeignet zum Einsatz in einer teleskopierenden Manteleinheit, zur definierten Positionierung eines oder mehrerer Zwischenmantelrohre relativ zu Außen- und Innenmantelrohr, und alternativ oder zusätzlich zur definierten Positionierung einer oder mehrerer Wälzlagereinheiten oder Gleiteinheiten relativ zu den Mantelrohren. Eine Wälzlagereinheit umfasst einen koaxialen, ein Mantelrohr ganz oder zumindest teilweise umschließenden Wälzkörperkäfig, in dem Wälzkörper drehbar gelagert bzw. drehbar aufgenommen sind. Eine Gleiteinheit umfasst beispielsweise eine koaxiale, ein Mantelrohr ganz oder zumindest teilweise umschließende Gleithülse, welche ein gut gleitfähiges Material aufweist, beispielsweise einen Kunststoff.

Jeweils mindestens eine Führungsbahn kann an jedem Mantelrohr einer Mehrfachteleskopanordnung angeordnet sein, also Außen-, Innen und Zwischenmantelrohr, wobei auch mehrere teleskopierende Zwischenmantelrohre als Zwischenelemente vorgesehen sein können. Falls zwischen Außen- und Innenmantelrohr Wälzkörper- oder Gleiteinheiten als Zwischenelemente angeordnet sind, können die ebenfalls Führungsbahnen aufweisen, auch bei einem Mehrfachteleskop.

Vorzugsweise kann eine erfindungsgemäße Positioniereinrichtung an einer Manteleinheit realisiert werden, die mehr als zwei teleskopierbare Zwischenelemente, wie Zwischenmantelrohre und/oder Wälzkörper-oder Gleiteinheiten, aufweist. Dank des erfindungsgemäß vorteilhaften geringen Bauraumbedarfs kann beispielsweise mit geringem Aufwand eine synchronisierte Positionierung von zwei Wälzlagereinheiten und eines dazwischen gelagerten Zwischenmantelrohrs relativ zu einem Außen- und Innenmantelrohr erfolgen, also einer Teleskopanordnung mit fünf oder mehr Teleskopelementen.

Eine vorteilhafte Ausführung kann vorsehen, dass die Führungsbahnen offene Führungsschlitze aufweisen, durch die sich der Führungskörper quer zur Längsachse hindurch erstreckt. Die Führungsschlitze können mit geringem Fertigungsaufwand als langgestreckte, bezüglich der Längsachse radial durchgehende Schlitzöffnungen oder -durchbrechungen in der Wandung eines Mantelrohrs oder eines Zwischenelements ausgeführt sein. Durch einen Führungsschlitz kann ein als Führungsstift- oder -zapfen ausgebildeter Führungskörper hindurchgesteckt werden, der in dem Führungsschlitz entlanggleiten kann. Dadurch, dass ein einziger Führungskörper durch die Führungsschlitze mindestens zweier benachbarter Teleskopelemente hindurch erstreckt, können die beiden Kulissenführungen einfach miteinander gekoppelt werden. Es ist auch ohne zusätzlichen Aufwand möglich, dass der Führungskörper die Führungsschlitze von zwei, drei, vier oder mehr Teleskopelementen, beispielsweise Mantelrohren und/oder Wälzkörper oder Gleiteinheiten durchsetzt. Bereits mittels einer kompakten, einfach aufgebauten Positioniereinheit können auf diese Weise sämtliche Teleskopelemente einer Mehrfachteleskopanordnung eindeutig relativ zueinander positioniert und die teleskopierende Relativbewegung synchronisiert werden.

Es kann vorgesehen sein, dass der Führungskörper in den Führungsschlitzen schwimmend gelagert ist. Der Führungskörper durchsetzt die Führungsschlitze von zwei, drei oder mehr Teleskopelementen, welche Mantelrohre und Zwischenelemente einschließen. In jedem Führungsschlitz ist der Führungskörper, entlang der Erstreckung bewegbar in der Schlitzöffnung gehalten. Auf diese Weise verbindet der Führungskörper die Teleskopelemente, ist aber dabei bezüglich jedes einzelnen Teleskopelements bewegbar, d.h. schwimmend gelagert. Der Führungskörper kann beispielsweise einen die Führungsschlitze durchsetzenden Führungsstift oder -zapfen umfassen, der an seinen nach innen aus dem Innenmantelrohr und nach außen aus dem Außenmantelrohr vorstehenden Enden einen über die Breite des Führungsschlitzes überstehenden Kopf oder dergleichen aufweist und dadurch in den Führungsschlitzen gehalten und gegen Herausfallen gesichert ist. Der Kopf kann beispielsweise durch Vernieten, Umbördeln oder andere Kaltumformverfahren erzeugt werden. Eine derartige Anordnung kann vorteilhaft mit geringen Abmessungen und fertigungs- und montagetechnisch einfach und zuverlässig realisiert werden.

Es kann vorgesehen sein, dass sich die Führungsbahnen in einem Überlagerungsabschnitt schneiden, wobei der Führungskörper im Überlagerungsabschnitt angeordnet ist. Die erfindungsgemäß unterschiedlich geneigten Führungsbahnen überkreuzen sich in ihrem Verlauf in einem Überlagerungsabschnitt, der abhängig vom Verstellzustand bezüglich jedes der Teleskopelemente in Längsrichtung definiert angeordnet ist. Dadurch, dass der Führungskörper die Lage des Überlagerungsabschnitts relativ zu jedem Teleskopelement eindeutig bestimmt, ist auch die relative Positionierung eindeutig definiert. Besonders einfach, kompakt und zuverlässig kann diese Anordnung dadurch realisiert werden, dass die Führungsbahnen als Führungsschlitze ausgebildet sind, die sich im Überlagerungsbereich derart überlappen, dass ein durch sämtliche aneinander geführten Teleskopelemente, nämlich Mantelrohre und Zwischenelemente, durchgehender offener Bereich gebildet wird. Der Führungskörper wird dort durch sämtliche Führungsschlitze hindurchgeführt, und in den Führungsschlitzen schwimmend gelagert, so dass eine Zwangskopplung sämtlicher Teleskopelemente erzeugt wird.

Es kann vorteilhaft sein, dass der Führungskörper drei, vier oder mehr Führungsschlitze durchsetzt und darin schwimmend gelagert ist. Dadurch kann eine entsprechend große Zahl von Mantelrohren und Zwischenelementen räumlich kompakt und mit geringem Aufwand relativ zueinander eindeutig positioniert und die teleskopierende Bewegung synchronisiert werden.

Es kann vorgesehen sein, dass der Führungskörper in Längsrichtung unverlagerbar an einem Mantelrohr oder einem Zwischenelement gehalten ist. Dabei ist es bevorzugt möglich, dass der Führungskörper quer zur Längsrichtung bewegbar gelagert ist. Das Teleskopelement, an dem der Führungskörper in Längsrichtung unverlagerbar ist, bleibt bei einer teleskopierenden Verstellung der übrigen Teleskopelemente quasi in der Mittellage. Der Führungskörper kann beispielsweise als Führungsstift oder -zapfen in einem relativ zur Längsrichtung senkrechten Führungsschlitz bewegbar gelagert sein.

Eine vorteilhafte Ausführung kann vorsehen, dass mindestens zwei Führungsbahnen über den Umfang verteilt angeordnet sind, vorzugsweise gleichmäßig verteilt. Beispielsweise können als Führungsschlitze ausgebildete Führungsbahnen bezüglich der Längsachse gegenüberliegend in die Wandungen von Mantelrohren und Zwischenelementen eingebracht sein. Dadurch werden die Teleskopelemente symmetrisch gehalten und geführt, und ungleichmäßige Belastung, Verkanten oder dergleichen werden verhindert.

Eine erfindungsgemäße Lenksäule kann mindestens zwei, bevorzugt drei teleskopierbare Mantelrohre aufweisen, wobei zwischen den Mantelrohren Wälzkörper- oder Gleiteinheiten eingesetzt sein können. Bei einem derartigen Mehrfachteleskop kann ein besonders großes Verstellverhältnis zwischen der maximal zusammengeschobenen und der maximal auseinander gefahrenen Verstellposition realisiert werden, wie dies beispielsweise bei verstaubaren Lenksäulen für autonomen Fahrbetrieb vorteilhaft ist. Durch die erfindungsgemäße Positioniereinrichtung kann die Positionierung sämtlicher Mantelrohre und Zwischenelemente synchronisiert werden.

Zur Verstellung der Lenksäule kann ein motorischer Verstellantrieb vorgesehen sein, der mit den Mantelrohren gekoppelt ist, um die Mantelrohre zumindest in Längsrichtung relativ zueinander zu verstellen. Von dem motorischen Verstellantrieb kann das Innenmantelrohr relativ zum Außenmantelrohr in Längsrichtung ein- und ausfahrbar sein. Der Verstellantrieb kann einen Spindeltrieb umfassen, mit einer auf einer Gewindespindel angeordneten Spindelmutter, und einem Antriebsmotor, von dem die Gewindespindel und die Spindelmutter relativ zueinander drehend antreibbar sind. Derartige Verstellantriebe sind im Stand der Technik prinzipiell bekannt und gelten als zuverlässig und robust. Dabei ist die Spindelmutter an dem einen Mantelrohr, dem Innen- oder Außenmantelrohr, in Richtung der Längsachse unverschieblich angebracht, und die Gewindespindel an dem dazu teleskopierbaren anderen Mantelrohr, dem Außen- oder Innenmantelrohr. Von einem elektrischen Stellmotor wird über ein geeignetes Getriebe, beispielsweise ein Schnecken- oder Riemengetriebe, die Spindelmutter oder die Gewindespindel drehend angetrieben, wodurch die relativ dazu bezüglich der Drehung feststehende Gewindespindel oder Spindelmutter translatorisch in Richtung der Spindellängsachse bewegt wird, und je nach relativer Drehrichtung das Innenmantelrohr relativ zum Außenmantelrohr in Achsrichtung ein- oder ausfährt.

Die Manteleinheit bildet mit der darin gelagerten Lenkspindel eine Stelleinheit. Die Stelleinheit kann in einer mit einer Fahrzeugkarosserie verbindbaren Trageinheit gehalten sein. Dabei kann vorgesehen sein, dass die Stelleinheit an der Trageinheit um eine quer zur Längsachse, also orthogonal zur Achsrichtung liegende Schwenkachse höhenverschwenkbar gelagert ist. Durch die Verschwenkung um eine derartige horizontale Schwenkachse kann eine Höhenverstellung realisiert werden, bei der das am hinteren Ende der Lenkspindel angebrachte Lenkrad in der Höhe relativ zur Fahrerposition eingestellt werden kann.

Die Höhenverstellung kann manuell erfolgen. Insbesondere zum automatisierten Verstauen der Lenksäule beim autonomen Fahren ist es vorteilhaft, dass ein elektrischer Höhen-Verstellantrieb mit der Trageinheit und der Stelleinheit verbunden ist, von dem die Stelleinheit relativ zur Trageinheit um die Schwenkachse bewegbar ist. Der Höhen-Verstellantrieb ist an sich ebenfalls bekannt und kann beispielsweise als elektromotorisch angetriebener Spindeltrieb realisiert werden, wie vorangehend für die Längsverstellung beschrieben.

Die Erfindung betrifft weiterhin eine Lenksäule für ein Kraftfahrzeug, umfassend eine Manteleinheit, in der eine Lenkspindel um eine in Längsrichtung erstreckte Längsachse drehbar gelagert ist, wobei die Manteleinheit mindestens zwei in Längsrichtung relativ zueinander verstellbare, teleskopartig geführte Mantelrohre aufweist, wobei zwischen den Mantelrohren mindestens ein in Längsrichtung verlagerbares Zwischenelement angeordnet ist, und umfassend eine Positionserfassungseinrichtung zur Erfassung der relativen Position der Mantelrohre. Weiterhin betrifft die Erfindung ein Verfahren zur Messung des Verstellzustands einer Lenksäule für ein Kraftfahrzeug.

Eine automatisierte motorische Verstellung der Lenksäule anhand von individuellen Lenkradpositionsdaten kann dadurch ermöglicht werden, dass die Position des Lenkrads im Fahrzeuginnenraum anhand des Verstellzustands der Lenksäule ermittelt und abgespeichert wird. Hierzu ist es beispielsweise aus der DE 10 2019 108 466 A1 bekannt, die Längseinstellung der Lenksäule dadurch zu erfassen, dass mittels einer Positionserfassungseinrichtung die relative Position von Außen- und Innenmantelrohr gemessen und daraus die aktuelle Länge der Manteleinheit bestimmt wird. Dadurch, dass geeignete elektrische Positionssensoren am Außen- und Innenmantelrohr angebracht sind, kann die Länge der Manteleinheit als Längenmesswert elektrisch gemessen und gespeichert werden. Bei Bedarf kann die Lenksäule bevorzugt automatisiert motorisch in die gespeicherte Position verstellt werden. Dadurch kann ein hoher Fahrkomfort realisiert werden, um beim Ein- oder Aussteigen, oder auch beim autonomen Fahren die Lenksäule automatisch wahlweise zu verstauen oder in eine ergonomische Bedienposition zu bringen.

Insbesondere bei mehrfach teleskopierbaren Lenksäulen mit einem relativ großen Verstellweg und einem oder mehreren zwischen Außen- und Innenmantelrohr teleskopierbar angeordneten Zwischenelementen ist die Messung der relativen Position von Außen- und Innenmantelrohr umständlich und aufwendig.

Angesichts der vorangehend erläuterten Problematik ist es eine Aufgabe der vorliegenden Erfindung, eine eine verbesserte Positionserfassung bei einer mehrfach teleskopierbaren Lenksäule zu ermöglichen.

Diese Aufgabe wird erfindungsgemäß gelöst durch eine Lenksäule mit den nachfolgend beschriebenen Merkmalen. Vorteilhafte Weiterbildungen ergeben sich aus den Unteransprüchen.

Bei einer Lenksäule für ein Kraftfahrzeug, umfassend eine Manteleinheit, in der eine Lenkspindel um eine in Längsrichtung erstreckte Längsachse drehbar gelagert ist, wobei die Manteleinheit mindestens zwei in Längsrichtung relativ zueinander verstellbare, teleskopartig geführte Mantelrohre aufweist, wobei zwischen den Mantelrohren mindestens ein in Längsrichtung verlagerbares Zwischenelement angeordnet ist, und umfassend eine Positionserfassungseinrichtung zur Erfassung der relativen Position der Mantelrohre, ist erfindungsgemäß vorgesehen, dass an den Mantelrohren und dem Zwischenelement eine Positioniereinrichtung angeordnet ist und derart mit diesen zusammenwirkt, dass die Mantelrohre und das Zwischenelement relativ zueinander definiert positioniert werden, wobei von der Positionserfassungseinrichtung die relative Position des Zwischenelements zu einem Mantelrohr oder einem weiteren Zwischenelement erfassbar ist.

Erfindungsgemäß weist die Lenksäule eine Positioniereinrichtung auf, die gleichbedeutend als Synchronisiereinrichtung bezeichnet wird, mit der die Positionserfassungseinrichtung zusammenwirkt. Durch die Positioniereinrichtung sind die Mantelrohre und das oder die Zwischenelemente bezüglich ihrer relativen Teleskopbewegung in Längsrichtung miteinander synchronisiert, d.h. zwangsgekoppelt, bevorzugt mechanisch. Bei einer relativen Positionierung der Mantelrohre, also insbesondere des Außenmantelrohrs am einen Ende der Manteleinheit relativ zum Innenmantelrohr am anderen Ende der Manteleinheit, erfolgt eine Zwangspositionierung, d.h. eine zwangsgeführte Positionierung des Zwischenelements oder der Zwischenelemente, also eine eindeutig definierte relative Positionierung des oder der Zwischenelemente in Längsrichtung relativ zu den Mantelrohren, oder - soweit vorhanden - relativ zu einem weiteren Zwischenelement.

Die Positionserfassungseinrichtung ist nicht wie im Stand der Technik ausschließlich an den Mantelrohren, also am Außen- und Innenmantelrohr angebracht, sondern wirkt bevorzugt direkt mit dem Zwischenelement zusammen. Die Positionserfassungseinrichtung liefert dadurch einen Positionsmesswert, welcher die des Zwischenelements Position in Längsrichtung relativ zu einem Mantelrohr, also dem Außen- oder Innenmantelrohr angibt, oder - falls mindestens zwei oder mehr Zwischenelemente vorhanden sind - relativ zu einem weiteren Zwischenelement.

Dadurch, dass das Zwischenelement über die zwangsgeführte Positioniereinrichtung immer eindeutig relativ zu den Mantelrohren positioniert ist, kann aus dem besagten Positionsmesswert eindeutig die relative Positionierung von Außen- und Innenmantelrohr bestimmt werden, welche eindeutig mit dem Längenmesswert korreliert ist, der die Längeneinstellung der Manteleinheit und damit der Lenksäule angibt.

Aus dem Positionsmesswert kann unter Berücksichtigung des Übersetzungsverhältnisses der Positioniereinrichtung, welches das Verhältnis der Verlagerung des Zwischenelements relativ zur Verlagerung der Mantelrohre angibt, aus der Positionierung des Zwischenelements einfach die relative Positionierung der Mantelrohre berechnet werden und so der Längenmesswert bestimmt werden, der die Längenverstellung der Lenksäule angibt. Hierzu kann die Positioniereinrichtung eine elektronische Auswerteeinrichtung aufweisen oder an eine solche angeschlossen sein, welche ausgehend von dem Positionsmesswert den Längenmesswert berechnet und ausgibt, der einer weiteren Auswertung und Verarbeitung zugeführt werden kann. Die Auswerteeinrichtung kann bevorzugt ausgebildet und eingerichtet sein zur Bestimmung der relativen Position der Mantelrohre aus der gemessenen relativen Position des Zwischenelements.

Ein Vorteil der Erfindung ist, dass sich die Position des Zwischenelements relativ zu einem Mantelrohr oder einem weiteren Zwischenelement lediglich um einen Bruchteil der Gesamtverstellung von Außen- und Innenmantelrohr verlagert, der durch das Übersetzungsverhältnis der Positioniereinrichtung bestimmt wird. Beispielsweise befindet sich bei einem Übersetzungsverhältnis von 2:1 das Zwischenelement immer mittig zwischen den endseitigen Mantelrohren, so dass es beim Verstellen maximal um die halbe Gesamtverstellung verlagert wird. Dadurch kann der Messbereich der Positionserfassungseinrichtung in Längsrichtung kleiner sein kann als im Stand der Technik, wodurch eine kompakte und kostengünstige Ausführung ermöglicht wird.

Ein weiterer Vorteil ist, dass die Positionserfassungseinrichtung nicht wie im Stand der Technik an dem in den Fahrzeuginnenraum verstellbaren Mantelrohr, an dem die Lenkeingabe angebracht ist, angreifen muss. Es ist in vorteilhafter Weise eine bauraumoptimierte, karosserieseitige Anbringung zwischen dem dort befindlichen Mantelrohr und dem Zwischenelement ermöglicht, so dass die Positionserfassungseinrichtung weniger in den Fahrzeuginnenraum vorsteht und weniger Bauraum beansprucht.

Es kann bevorzugt vorgesehen sein, dass die Positionserfassungseinrichtung an dem Zwischenelement und einem Mantelrohr oder einem weiteren Zwischenelement angeordnete, miteinander korrespondierende Sensorelemente aufweist. Vorzugsweise können Sensorelemente eingesetzt werden, welche als Messwert absolute Positionsmesswerte oder Längenmesswerte ausgeben, die mit der Positionierung des Zwischenelements zu dem erfindungsgemäß Bezug genommenen Mantelrohr oder weiteren Zwischenelement korrespondieren, d.h. den Abstand in Längsrichtung angeben. Alternativ können auch Inkrementalgeber oder dergleichen relative Messwertgeber eingesetzt werden, welche eine relative Verstellung erfassen.

Vorzugsweise können die Sensorelemente kapazitiv, induktiv oder resistiv ausgebildet sein. Bevorzugt können kontaktlose elektrische Messverfahren eingesetzt werden. Vorteile sind eine hohe Robustheit und Messgenauigkeit, eine einfache Integration in elektronische Messund Auswertesysteme und eine kleine Bauform. Derartige Sensorelemente sind kommerziell verfügbar, und umfassen beispielsweise langgestreckte, streifen- oder schienenförmige Messwertgeber und damit korrespondierende Messaufnehmer, welche abhängig von ihrer relativen Anordnung in Längsrichtung absolute oder relative Längenmesswerte ausgeben. Derartige Sensoren können konstruktiv einfach an einem Zwischenelement und einem Mantelrohr angebracht und in eine Manteleinheit integriert werden. Alternativ ist auch ein Einsatz von optischen, akustischen oder nach anderen Messprinzipien arbeitenden Sensoren denkbar.

Es kann vorgesehen sein, dass ein erstes Sensorelement innen an einem Mantelrohr oder Zwischenelement angeordnet ist, und ein damit korrespondierendes zweites Sensorelement dem ersten Sensorelement zugeordnet außen an einem in der Teleskopanordnung benachbarten Zwischenelement oder Mantelrohr. Dadurch kann eine vorteilhafte kompakte Bauform realisiert werden. Außerdem können die Sensorelement geschützt in die Manteleinheit integriert werden.

Die Zwischenelemente können Teleskopelemente umfassen, beispielsweis mindestens ein Zwischenmantelrohr, und zusätzlich oder alternativ auch mindestens eine in Längsrichtung zwischen zwei Mantelrohren verlagerbar angeordnete Lagereinheit, beispielsweise eine teleskopierbare Wälzlager- oder Gleiteinheit.

Die Zwischenelemente können bevorzugt rohrförmig mit einem runden oder unrunden Profilquerschnitt ausgebildet sein. Ein unrunder Profilquerschnitt kann beispielsweise drei-, vier-, sechs-, acht- oder mehrkantig ausgebildet sein. Bei einem derartigen mehrkantigen Profil kann ein erfindungsgemäßes Sensorelement bevorzugt im Bereich einer flächenhaft erstreckten, im Wesentlichen ebenen Seitenwand angeordnet sein. Dadurch ist eine konstruktiv einfache bauliche Integration ermöglicht. Außerdem ist eine eindeutige und sichere Orientierung bezüglich der Längsachse gewährleistet, da der unrunde Querschnitt ohne weitere Maßnahmen bereits formschlüssig gegen Verdrehung gesichert ist.

Es kann vorgesehen sein, dass die Positionserfassungseinrichtung ein drittes Sensorelement und ein mit diesem zusammenwirkendes viertes Sensorelement aufweist. Dank einer solchen Ausbildung kann die Positionserfassungseinrichtung redundant ausgebildet werden, so dass die Sicherheit gegen einen Ausfall der Positionserfassungseinrichtung reduziert ist.

In einer weiteren vorteilhaften Weiterbildung kann es vorgesehen sein, dass das erste Sensorelement und zweite Sensorelement gegenüber dem dritten Sensorelement und dem vierten Sensorelement ein anderes Messverfahren aufweisen, mit anderen Worten weisen diese zueinander unterschiedliche Messverfahren basierend auf unterschiedliche Messprinzipien auf. Dadurch kann die Sicherheit gegen einen Ausfall weiter erhöht werden.

Zur Verstellung der Lenksäule kann bevorzugt ein motorischer Verstellantrieb vorgesehen sein, der an den Mantelrohren, bevorzugt am Innen- und Außenmantelrohr, oder an einem Mantelrohr und einem Zwischenelement oder an zwei Zwischenelementen angreift, um die Mantelrohre in Längsrichtung relativ zueinander zu verstellen. Von dem motorischen Verstellantrieb kann das Innenmantelrohr relativ zum Außenmantelrohr in Längsrichtung ein- und ausfahrbar sein.

Ein Verstellantrieb kann einen Spindeltrieb umfassen, mit einer auf einer Gewindespindel angeordneten Spindelmutter, und einem Antriebsmotor, von dem die Gewindespindel und die Spindelmutter relativ zueinander drehend antreibbar sind. Derartige Verstellantriebe sind im Stand der Technik prinzipiell bekannt und gelten als zuverlässig und robust. Dabei ist die Spindelmutter an dem einen Mantelrohr, dem Innen- oder Außenmantelrohr, in Richtung der Längsachse unverschieblich angebracht, und die Gewindespindel an dem dazu teleskopierbaren anderen Mantelrohr, dem Außen- oder Innenmantelrohr. Alternativ kann der Spindeltrieb auch an mit den Mantelrohren zwangsgekoppelten Zwischenelementen angreifen. Von einem elektrischen Stellmotor werden über ein geeignetes Getriebe, beispielsweise ein Schnecken- oder Riemengetriebe, die Spindelmutter oder die Gewindespindel drehend angetrieben, wodurch die relativ dazu bezüglich der Drehung feststehende Gewindespindel oder Spindelmutter translatorisch in Richtung der Spindellängsachse bewegt wird, und je nach relativer Drehrichtung das Innenmantelrohr relativ zum Außenmantelrohr in Achsrichtung einoder ausfährt.

Mittels der erfindungsgemäßen Positionserfassungseinrichtung kann auch die Verstellung des Verstellantriebs erfasst werden, welcher mit der Verstellung der damit verbundenen Teleskopelemente korrespondiert. Beispielsweise kann die Positionserfassungseinrichtung an dem Verstellantrieb angeordnet oder mit diesem integriert ausgebildet sein.

In einer vorteilhaften Weiterbildung kann die Positionserfassungseinrichtung in eine Steuereinheit integriert sein, wobei die Steuereinheit zur Ansteuerung des Verstellantriebs ausgebildet ist.

Die Manteleinheit bildet mit der darin gelagerten Lenkspindel eine Stelleinheit. Diese kann in einer mit einer Fahrzeugkarosserie verbindbaren Trageinheit gehalten sein. Dabei kann vorgesehen sein, dass die Stelleinheit an der Trageinheit um eine quer zur Längsachse, also orthogonal zur Achsrichtung liegende Schwenkachse höhenverschwenkbar gelagert ist. Durch die Verschwenkung um eine derartige horizontale Schwenkachse kann eine Höhenverstellung realisiert werden, bei der das am hinteren Ende der Lenkspindel angebrachte Lenkrad in der Höhe relativ zur Fahrerposition eingestellt werden kann.

Die Höhenverstellung kann manuell erfolgen. Insbesondere zum automatisierten Verstauen der Lenksäule beim autonomen Fahren ist es vorteilhaft, dass ein elektrischer Höhen-Verstellantrieb mit der Trageinheit und der Stelleinheit verbunden ist, von dem die Stelleinheit relativ zur Trageinheit um die Schwenkachse bewegbar ist. Ein Höhen-Verstellantrieb ist an sich ebenfalls bekannt und kann beispielsweise als elektromotorisch angetriebener Spindeltrieb realisiert werden, wie vorangehend für die Längsverstellung beschrieben.

Die Erfindung betrifft weiterhin ein Verfahren zur Messung des Verstellzustands einer Lenksäule für ein Kraftfahrzeug, umfassend eine Manteleinheit, in der eine Lenkspindel um eine in Längsrichtung erstreckte Längsachse drehbar gelagert ist, wobei die Manteleinheit mindestens zwei in Längsrichtung relativ zueinander verstellbare, teleskopartig geführte Mantelrohre aufweist, wobei zwischen den Mantelrohren mindestens ein in Längsrichtung verlagerbares Zwischenelement angeordnet ist, wobei aus der relativen Position der Mantelrohre ein mit dem Verstellzustand korrelierter Längenmesswert bestimmt wird, bei dem erfindungsgemäß ist vorgesehen ist,
dass die Mantelrohre und das Zwischenelement relativ zueinander definiert positioniert werden, und
dass die relative Position des Zwischenelements zu einem Mantelrohr oder einem weiteren Zwischenelement von der Positionserfassungseinrichtung als Positionsmesswert gemessen wird, und
dass aus dem gemessenen Positionsmesswert ein Längenmesswert berechnet wird.

Wie oben zu der erfindungsgemäßen Lenksäule erläutert ist, sind die Mantelrohre und das oder die Zwischenelemente in Längsrichtung zwangsgekoppelt. Bevorzugt kann die Lenksäule eine Positioniereinrichtung aufweisen, durch welche die Mantelrohre und das Zwischenelement zwangsgekoppelt relativ zueinander definiert positioniert werden.

Bevorzugt kann der Positionsmesswert durch eine Positionserfassungseinrichtung der Lenksäule gemessen werden, wie oben für die erfindungsgemäße Lenksäule beschrieben.

Der Positionsmesswert kann bevorzugt in eine Auswerteeinheit eingegeben, sprich an diese übermittelt werden, die aus dem gemessenen Positionsmesswert einen Längenmesswert berechnet und ausgibt. Die Berechnung kann wie oben beschrieben unter Berücksichtigung des Übersetzungsverhältnisses der Positioniereinrichtung erfolgen.

Die Verstellung der Lenksäule kann bevorzugt mittels eines motorischen Verstellantriebs erfolgen. Dabei kann der Verstellantrieb über eine mit der Auswerteeinheit verbundene Steuereinheit derart angesteuert werden, dass die Lenksäule automatisiert anhand eines Längenmesswerts in einen definierten Verstellzustand eingestellt wird.

In einer vorteilhaften Weiterbildung kann vorgesehen sein, das die Position, die durch die Positionserfassungseinrichtung ermittelt wird, mit einer Position verglichen wird, die aus ermittelten Parametern des Verstellantriebs, beispielsweise verstellabhängige Messinkrementalschritte, Hall Counts, oder dergleichen ermittelt wird. Bei Abweichung der ermittelten Positionen zueinander kann die Ausgabe einer Fehlermeldung erfolgen.

Bei einer Lenksäule für ein Kraftfahrzeug, umfassend eine Manteleinheit, in der eine Lenkspindel um eine in Längsrichtung erstreckte Längsachse drehbar gelagert ist, wobei die Manteleinheit mindestens zwei in Längsrichtung relativ zueinander verstellbare, teleskopartig geführte Mantelrohre aufweist, wobei zwischen den Mantelrohren ein in Längsrichtung verlagerbares Zwischenelement angeordnet ist, und die eine Positioniereinrichtung zur Positionierung der Zwischenelements relativ zu den Mantelrohren in Längsrichtung aufweist, kann vorgesehen sein, dass die Positioniereinrichtung langgestreckte Führungsbahnen umfasst, die an den Mantelrohren und dem Zwischenelement angeordnet sind und derart miteinander zusammenwirken, dass diese die Mantelrohre und das Zwischenelement relativ zueinander definiert positionieren.

Die Führungsbahnen sind eingerichtet und ausgestaltet, so dass sie eine zwischen den Mantelrohren bezüglich einer relativen Bewegung in Längsrichtung wirksame Zwangsführung bilden, so dass die Mantelrohre und das Zwischenelement in Längsrichtung relativ zueinander definiert positioniert, d.h. synchronisiert bewegt werden.

Die erfindungsgemäße Positioniereinrichtung weist eine Anordnung von miteinander zusammenwirkenden mechanischen Zwangsführungen auf, durch die die einzelnen Teleskopelemente, welche die Mantelrohre und das mindestens eine Zwischenelement umfassen, in jedem Verstellzustand der Teleskopanordnung in Längsrichtung eindeutig relativ zueinander positioniert sind. Mit anderen Worten kann die Relativbewegung der Teleskopelemente beim Auseinanderziehen oder Zusammenschieben synchronisiert werden. Die langgestreckten Führungsbahnen können gleichbedeutend als Führungsbahnelemente oder Führungskulissen bezeichnet werden.

Eine Führungsbahn kann beispielsweise eine langgestreckte Vertiefung oder Öffnung, wie beispielsweise eine Führungsnut, einen Führungsschlitz oder dergleichen aufweisen, oder alternativ oder zusätzlich einen langgestreckten Vorsprung, wie beispielsweise einen Führungssteg, eine Führungsschiene oder -sicke oder dergleichen.

In einer vorteilhaften Weiterbildung kann vorgesehen sein, dass die Führungsbahnen relativ zueinander und relativ zur Längsachse geneigt verlaufen.

In einer weiteren vorteilhaften Weiterbildung kann an den Führungsbahnen mindestens ein Führungskörper derart geführt sein, so dass er die Mantelrohre und das Zwischenelement relativ zueinander definiert positioniert.

Der Führungskörper ist an der Führungsbahn in Richtung ihrer Längserstreckung zwangsgeführt, so dass eine Art Kulissenführung gebildet sein kann, bei welcher der Führungskörper an oder in der Führungsbahn geführt entlangbewegt werden kann, beispielsweise entlanggleiten kann. Beispielsweise kann der Führungskörper einen Führungsvorsprung, wie einen Führungszapfen, -stift oder dergleichen aufweisen, der derart in eine korrespondierende Führungsnut oder einen Führungsschlitz eingreift, dass er darin quer zur Längserstreckung formschlüssig gehalten ist, und in Richtung der Längserstreckung zwangsgeführt entlangbewegt werden kann. Alternativ oder zusätzlich kann der Führungskörper eine Vertiefung aufweisen, in die entsprechend ein Vorsprung der Führungsbahn eingreifen kann.

Jede Führungsbahn an einem Teleskopelement, also einem Mantelrohr oder einem Zwischenelement, ist geneigt, d.h. nichtparallel, in einem relativen Winkel größer als 0° und kleiner als 180°, bezüglich der Längsachse und bezüglich einer Führungsbahn an einem anderen Teleskopelement ausgerichtet. Dabei kann eine Führungsbahn einen geraden oder gebogenen Verlauf haben. Bei einem mehreckigen Querschnitt von Mantelrohr oder Zwischenelement kann eine Führungsbahn an einer im Wesentlichen ebenen Seitenfläche angeordnet oder ausgebildet sein, so dass sie sich entsprechend parallel zu einer Längsebene erstreckt, die parallel zur Längsachse ist. Bei einem runden Querschnitt kann die Führungsbahn schraubenförmig mit einer durch die Neigung vorgegebenen Steigung ausgebildet sein.

Dadurch, dass der Führungskörper gleichzeitig in die korrespondierenden Führungsbahnen der Mantelrohre und des Zwischenelements eingreift und geführt ist, also an mindestens drei Führungsbahnen zwangsgeführt ist, wird eine Zwangskopplung erzeugt zwischen sämtlichen Mantelrohren und Zwischenelementen. Auf diese Weise sind nur bedingte relative Positionierungen der Mantelrohre und des Zwischenelements zueinander ermöglicht, welche durch die Zwangsführung erlaubt werden. Die gekoppelten oder synchronisierten Bewegungsbahnen werden dabei bestimmt durch die möglichen gemeinsamen Positionierungen sämtlicher Zwangsführungen zwischen den Teleskopelementen. Durch die unterschiedliche Neigung wird für jeden Verstellzustand der Manteleinheit in Längsrichtung eine eindeutige relative Positionierung der Mantelrohre und des Zwischenelements definiert. Daraus ergibt sich der Vorteil einer definierten, gleichbleibenden Steifigkeit der Manteleinheit.

Ein besonderer Vorteil der Erfindung ist, dass die aus Führungsbahnen und Führungskörper gebildete Kulissenführung mit geringem Fertigungs- und Montageaufwand realisierbar ist, einfach aufgebaut und zuverlässig im Betrieb ist.

Ein weiterer Vorteil ist, dass die Führungsbahnen raumsparend ausgebildet sein können, beispielsweise als Führungsnuten oder Führungsschlitze, welche bevorzugt einstückig, direkt in die Mantelrohre eingeformt und integriert werden können. Vorstehende Führungsvorsprünge, -stege, -sicken oder dergleichen können ebenfalls raumsparend ausgebildet und einstückig angeformt sein, beispielsweise durch plastische Umformung der Wandungen von Mantelrohren und Zwischenelementen. Dadurch ist die erfindungsgemäße Positioniereinrichtung besonders geeignet zum Einsatz in einer teleskopierenden Manteleinheit, zur definierten Positionierung eines oder mehrerer Zwischenmantelrohre relativ zu Außen- und Innenmantelrohr, und alternativ oder zusätzlich zur definierten Positionierung einer oder mehrerer Wälzlagereinheiten oder Gleiteinheiten relativ zu den Mantelrohren. Eine Wälzlagereinheit umfasst einen koaxialen, ein Mantelrohr ganz oder zumindest teilweise umschließenden Wälzkörperkäfig, in dem Wälzkörper drehbar gelagert bzw. drehbar aufgenommen sind. Eine Gleiteinheit umfasst beispielsweise eine koaxiale, ein Mantelrohr ganz oder zumindest teilweise umschließende Gleithülse, welche ein gut gleitfähiges Material aufweist, beispielsweise einen Kunststoff.

Jeweils mindestens eine Führungsbahn kann an jedem Mantelrohr einer Mehrfachteleskopanordnung angeordnet sein, also Außen-, Innen und Zwischenmantelrohr, wobei auch mehrere teleskopierende Zwischenmantelrohre als Zwischenelemente vorgesehen sein können. Falls zwischen Außen- und Innenmantelrohr Wälzkörper- oder Gleiteinheiten als Zwischenelemente angeordnet sind, können die ebenfalls Führungsbahnen aufweisen, auch bei einem Mehrfachteleskop.

Vorzugsweise kann eine erfindungsgemäße Positioniereinrichtung an einer Manteleinheit realisiert werden, die mehr als zwei teleskopierbare Zwischenelemente, wie Zwischenmantelrohre und/oder Wälzkörper-oder Gleiteinheiten, aufweist. Dank des erfindungsgemäß vorteilhaften geringen Bauraumbedarfs kann beispielsweise mit geringem Aufwand eine synchronisierte Positionierung von zwei Wälzlagereinheiten und eines dazwischen gelagerten Zwischenmantelrohrs relativ zu einem Außen- und Innenmantelrohr erfolgen, also einer Teleskopanordnung mit fünf oder mehr Teleskopelementen.

Eine vorteilhafte Ausführung kann vorsehen, dass die Führungsbahnen offene Führungsschlitze aufweisen, durch die sich der Führungskörper quer zur Längsachse hindurch erstreckt. Die Führungsschlitze können mit geringem Fertigungsaufwand als langgestreckte, bezüglich der Längsachse radial durchgehende Schlitzöffnungen oder -durchbrechungen in der Wandung eines Mantelrohrs oder eines Zwischenelements ausgeführt sein. Durch einen Führungsschlitz kann ein als Führungsstift- oder -zapfen ausgebildeter Führungskörper hindurchgesteckt werden, der in dem Führungsschlitz entlanggleiten kann. Dadurch, dass ein einziger Führungskörper durch die Führungsschlitze mindestens zweier benachbarter Teleskopelemente hindurch erstreckt, können die beiden Kulissenführungen einfach miteinander gekoppelt werden. Es ist auch ohne zusätzlichen Aufwand möglich, dass der Führungskörper die Führungsschlitze von zwei, drei, vier oder mehr Teleskopelementen, beispielsweise Mantelrohren und/oder Wälzkörper oder Gleiteinheiten durchsetzt. Bereits mittels einer kompakten, einfach aufgebauten Positioniereinheit können auf diese Weise sämtliche Teleskopelemente einer Mehrfachteleskopanordnung eindeutig relativ zueinander positioniert und die teleskopierende Relativbewegung synchronisiert werden.

Es kann vorgesehen sein, dass der Führungskörper in den Führungsschlitzen schwimmend gelagert ist. Der Führungskörper durchsetzt die Führungsschlitze von zwei, drei oder mehr Teleskopelementen, welche Mantelrohre und Zwischenelemente einschließen. In jedem Führungsschlitz ist der Führungskörper, entlang der Erstreckung bewegbar in der Schlitzöffnung gehalten. Auf diese Weise verbindet der Führungskörper die Teleskopelemente, ist aber dabei bezüglich jedes einzelnen Teleskopelements bewegbar, d.h. schwimmend gelagert. Der Führungskörper kann beispielsweise einen die Führungsschlitze durchsetzenden Führungsstift oder -zapfen umfassen, der an seinen nach innen aus dem Innenmantelrohr und nach außen aus dem Außenmantelrohr vorstehenden Enden einen über die Breite des Führungsschlitzes überstehenden Kopf oder dergleichen aufweist und dadurch in den Führungsschlitzen gehalten und gegen Herausfallen gesichert ist. Der Kopf kann beispielsweise durch Vernieten, Umbördeln oder andere Kaltumformverfahren erzeugt werden. Eine derartige Anordnung kann vorteilhaft mit geringen Abmessungen und fertigungs- und montagetechnisch einfach und zuverlässig realisiert werden.

Es kann vorgesehen sein, dass sich die Führungsbahnen in einem Überlagerungsabschnitt schneiden, wobei der Führungskörper im Überlagerungsabschnitt angeordnet ist. Die erfindungsgemäß unterschiedlich geneigten Führungsbahnen überkreuzen sich in ihrem Verlauf in einem Überlagerungsabschnitt, der abhängig vom Verstellzustand bezüglich jedes der Teleskopelemente in Längsrichtung definiert angeordnet ist. Dadurch, dass der Führungskörper die Lage des Überlagerungsabschnitts relativ zu jedem Teleskopelement eindeutig bestimmt, ist auch die relative Positionierung eindeutig definiert. Besonders einfach, kompakt und zuverlässig kann diese Anordnung dadurch realisiert werden, dass die Führungsbahnen als Führungsschlitze ausgebildet sind, die sich im Überlagerungsbereich derart überlappen, dass ein durch sämtliche aneinander geführten Teleskopelemente, nämlich Mantelrohre und Zwischenelemente, durchgehender offener Bereich gebildet wird. Der Führungskörper wird dort durch sämtliche Führungsschlitze hindurchgeführt, und in den Führungsschlitzen schwimmend gelagert, so dass eine Zwangskopplung sämtlicher Teleskopelemente erzeugt wird.

Es kann vorteilhaft sein, dass der Führungskörper drei, vier oder mehr Führungsschlitze durchsetzt und darin schwimmend gelagert ist. Dadurch kann eine entsprechend große Zahl von Mantelrohren und Zwischenelementen räumlich kompakt und mit geringem Aufwand relativ zueinander eindeutig positioniert und die teleskopierende Bewegung synchronisiert werden.

Es kann vorgesehen sein, dass der Führungskörper in Längsrichtung unverlagerbar an einem Mantelrohr oder einem Zwischenelement gehalten ist. Dabei ist es bevorzugt möglich, dass der Führungskörper quer zur Längsrichtung bewegbar gelagert ist. Das Teleskopelement, an dem der Führungskörper in Längsrichtung unverlagerbar ist, bleibt bei einer teleskopierenden Verstellung der übrigen Teleskopelemente quasi in der Mittellage. Der Führungskörper kann beispielsweise als Führungsstift oder -zapfen in einem relativ zur Längsrichtung senkrechten Führungsschlitz bewegbar gelagert sein.

Eine vorteilhafte Ausführung kann vorsehen, dass mindestens zwei Führungsbahnen über den Umfang verteilt angeordnet sind, vorzugsweise gleichmäßig verteilt. Beispielsweise können als Führungsschlitze ausgebildete Führungsbahnen bezüglich der Längsachse gegenüberliegend in die Wandungen von Mantelrohren und Zwischenelementen eingebracht sein. Dadurch werden die Teleskopelemente symmetrisch gehalten und geführt, und ungleichmäßige Belastung, Verkanten oder dergleichen werden verhindert.

Eine erfindungsgemäße Lenksäule kann mindestens zwei, bevorzugt drei teleskopierbare Mantelrohre aufweisen, wobei zwischen den Mantelrohren Wälzkörper- oder Gleiteinheiten eingesetzt sein können. Bei einem derartigen Mehrfachteleskop kann ein besonders großes Verstellverhältnis zwischen der maximal zusammengeschobenen und der maximal auseinander gefahrenen Verstellposition realisiert werden, wie dies beispielsweise bei verstaubaren Lenksäulen für autonomen Fahrbetrieb vorteilhaft ist. Durch die erfindungsgemäße Positioniereinrichtung kann die Positionierung sämtlicher Mantelrohre und Zwischenelemente synchronisiert werden.

Es ist möglich, sämtliche oben beschriebenen Merkmale einer erfindungsgemäßen Lenksäule, bei der vorgesehen ist, dass die Positioniereinrichtung langgestreckte Führungsbahnen umfasst, die an den Mantelrohren und dem Zwischenelement angeordnet sind und derart miteinander zusammenwirken, dass diese die Mantelrohre und das Zwischenelement relativ zueinander definiert positionieren, mit sämtlichen vorangehend beschriebenen Merkmalen einer Lenksäule zu kombinieren, bei der vorgesehen ist, dass an den Mantelrohren und dem Zwischenelement eine Positioniereinrichtung angeordnet ist und derart mit diesen zusammenwirkt, dass die Mantelrohre und das Zwischenelement relativ zueinander definiert positioniert werden, wobei von der Positionserfassungseinrichtung die relative Position des Zwischenelements zu einem Mantelrohr oder einem weiteren Zwischenelement erfassbar ist. Mit anderen Worten sind Kombinationen von Führungsbahnen und Positionserfassungseinrichtungen denkbar und möglich.

### Beschreibung der Zeichnungen

- Figur 1: eine erfindungsgemäße Lenksäule in einer schematischen perspektivischen Ansicht,
- Figur 2: die Lenksäule gemäß Figur 1 in einer weiteren perspektivischen Ansicht,
- Figur 3a-e: die Lenksäule gemäß Figur 1 in schematischen teilweise aufgeschnittenen Ansichten,
- Figur 4a-e: die Lenksäule in Ansichten teilweise aufgeschnittenen analog zu Figur 3 in zusammen gefahrenem Verstellzustand,
- Figur 5: eine schematische Seitenansicht der Lenksäule gemäß Figur 1 im Verstellzustand gemäß Figur 3,
- Figur 6: eine schematische Seitenansicht der Lenksäule wie in Figur 5 im eingefahrenen Verstellzustand gemäß Figur 4,
- Figur 7: eine Lenksäule in einer zweiten Ausführungsform in einer Ansicht wie in Figur 1,
- Figur 8: eine vergrößerte Detailansicht der Lenksäule gemäß Figur 7 in einer auseinander gezogenen Ansicht,
- Figur 9: eine erfindungsgemäße Lenksäule in einer zweiten Ausführung in einer schematischen perspektivischen Ansicht,
- Figur 10: die Lenksäule gemäß Figur 9 in einer weiteren perspektivischen Ansicht,
- Figur 11a-e: die Lenksäule gemäß Figur 9 in schematischen teilweise aufgeschnittenen Ansichten,
- Figur 12a-e: die Lenksäule in Ansichten teilweise aufgeschnittenen analog zu Figur 11 in zusammen gefahrenem Verstellzustand,
- Figur 13: eine schematische Seitenansicht der Lenksäule gemäß Figur 9 im Verstellzustand gemäß Figur 11,
- Figur 14: eine schematische Seitenansicht der Lenksäule wie in Figur 13 im eingefahrenen Verstellzustand gemäß Figur 12.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

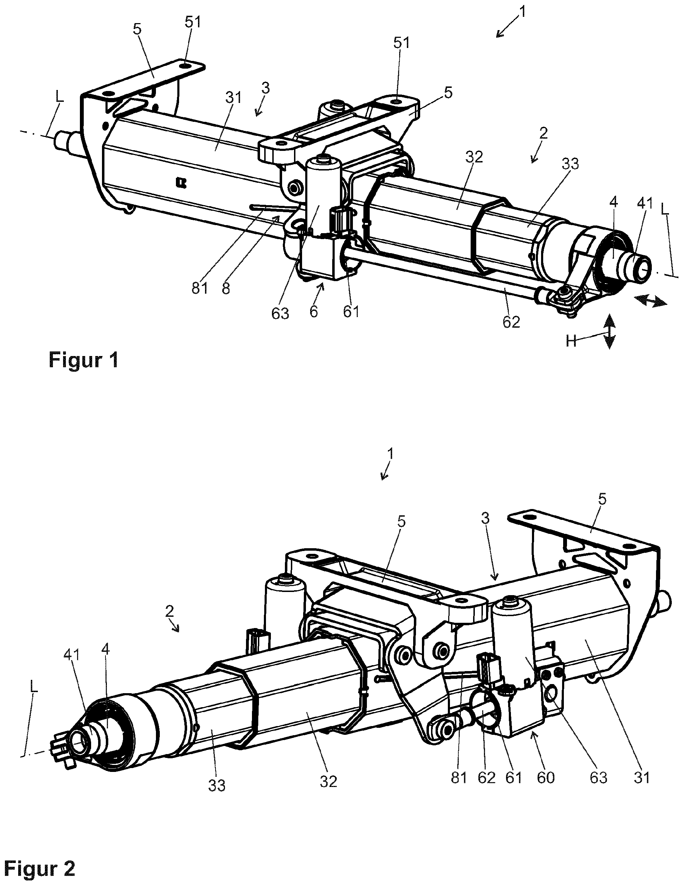

Figur 1 zeigt eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein Zwischenmantelrohr 32 und ein Innenmantelrohr 33 aufweist, die in Ihrer Gesamtheit als Mantelrohre 31, 32, und 33 bezeichnet werden. Diese sind in Längsrichtung, die der Achsrichtung einer Längsachse L entspricht, teleskopierend verschiebbar, koaxial ineinander angeordnet, wie mit dem Doppelpfeil angedeutet. Dabei bildet das Zwischenmantelrohr 32 ein Zwischenelement im Sinne der Erfindung.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Die Manteleinheit 3 ist in einer zweiteiligen Trageinheit 5 gehalten, welche Befestigungsmittel 51 in Form von Öffnungen zur Anbringung an einer nicht dargestellten Fahrzeugkarosserie aufweist.

Ein Verstellantrieb 6 weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich über den Verstellantrieb 6 in Längsrichtung, die der Achsrichtung der Längsachse L entspricht, an dem Außenmantelrohr 31 ab. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Achsrichtung der Längsachse L in das Außenmantelrohr 31 eingefahren oder ausgefahren wird, wie mit dem Doppelpfeil angedeutet. Dadurch wird eine Längsverstellung realisiert, durch die ein an dem Anschlussabschnitt 41 angebrachtes Lenkrad nach vorn in eine Verstauposition gebracht werden kann, in der das Innenmantelrohr 33 und das Zwischenmantelrohr 32 in dem Außenmantelrohr 31 eingefahren, d.h. nach vorn versenkt sind, oder in eine Bedienposition im Bedienbereich, in der die Mantelrohre 31, 32 und 33 auseinander ausgefahren sind.

Alternativ kann sich die Spindelmutter 61 an dem Innenmantelrohr 33, und die Gewindespindel 62 an dem Außenmantelrohr 31 abstützen.

In Figur 1 ist eine Verstellposition der Lenksäule 1 in einer Bedienstellung gezeigt, bei der das Zwischenmantelrohr 32 und das Innenmantelrohr 33 in Längsrichtung nach hinten bezogen auf die Fahrtrichtung des Kraftfahrzeugs - in der Zeichnung nach rechts - zumindest teilweise aus dem Außenmantelrohr 31 herausgefahren sind, so dass sich ein an dem Anschlussabschnitt 41 angebrachtes Lenkrad im Bedienbereich zur Eingabe von Lenkbefehlen befindet. Figur 2 zeigt denselben Verstellzustand, wobei durch die unterschiedliche Perspektive das Innenmantelrohr nach links herausgezogen ist.

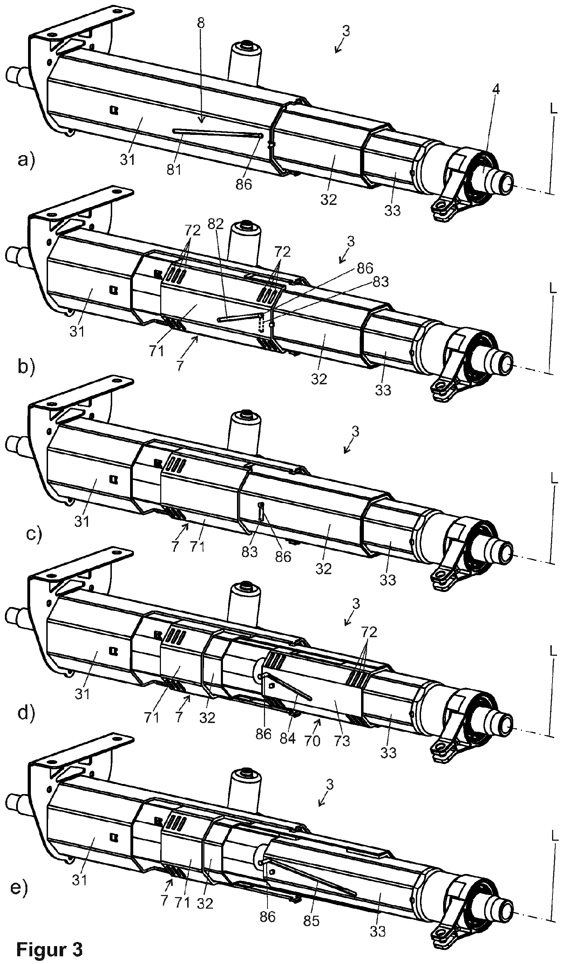

In Figur 3 ist die Manteleinheit 3 zur besseren Übersicht einzeln dargestellt, in der Perspektive und dem Verstellzustand gemäß Figur 1. In den einzelnen Teilfiguren 3a, b, c, d und e sind einzelne Teilabschnitte der Mantelrohre 31, 32, 33 aufgeschnitten und weggelassen und geben einen jeweils weiteren Blick ins Innere der Manteleinheit 3 frei.

In Figur 3b ist das Außenmantelrohr 31 teilweise weggelassen. Darin ist erkennbar, dass koaxial zwischen den Mantelrohren 31 und 32 eine Wälzlagereinheit 7 angeordnet ist, die relativ dazu teleskopierend in Längsrichtung verlagerbar ist und ein Zwischenelement im Sinne der Erfindung darstellt. Die Wälzlagereinheit 7 weist einen hülsenförmigen Wälzkörperkäfig 71 auf, der im gezeigten Beispiel als Rollenkäfig ausgebildet ist, in dem als Wälzkörper jeweils eine Mehrzahl von Rollen 72 jeweils in zur Längsachse L achsparallelen Reihen positioniert, drehbar gehalten sind. Die Rollen 72 rollen außen auf dem Außenmantelrohr 31, also auf einer Innenfläche des Außenmantelrohrs 31, und innen auf dem Zwischenmantelrohr 32, also auf einer Außenfläche des Zwischenmantelrohrs 32, ab, so dass zwischen den Mantelrohren 31 und 32 eine lineare Wälzlagerung in Längsrichtung gebildet ist.

In Figur 3c ist die Wälzlagereinheit 7 teilweise aufgeschnitten und weggelassen und gibt einen Blick frei auf die in Figur 3b von dem Wälzkörperkäfig 71 verdeckte Außenseite des Zwischenmantelrohrs 32 mit dem Führungsschlitz 83.

In Figur 3d ist das Zwischenmantelrohr 32 teilweise weggelassen. Darin ist erkennbar, dass koaxial zwischen den Zwischenmantelrohr 32 und dem Innenmantelrohr 33 eine zweite Wälzlagereinheit 70 angeordnet ist, die im Prinzip wie die Wälzlagereinheit 7 ausgestaltet ist und ein relativ zu den Mantelrohren 32 und 33 teleskopierend in Längsrichtung verlagerbares Zwischenelement im Sinne der Erfindung darstellt. Die Wälzlagereinheit 70 weist einen hülsenförmigen Wälzkörperkäfig 73 auf, in dem als Wälzkörper jeweils eine Mehrzahl von Rollen 72 jeweils in zur Längsachse L achsparallelen Reihen positioniert, drehbar gehalten sind. Die Rollen 72 rollen außen auf dem Zwischenmantelrohr 32, also auf einer Innenfläche des Zwischenmantelrohrs 32, und innen auf dem Innenmantelrohr 33, also auf einer Außenfläche des Innenmantelrohrs 33, ab, so dass zwischen den Mantelrohren 32 und 33 eine lineare Wälzlagerung in Längsrichtung gebildet ist.

In Figur 3e ist die Wälzlagereinheit 70 teilweise weggelassen und gibt einen Blick frei auf die in Figur 3d von dem Wälzkörperkäfig 73 verdeckte Außenseite des Innenmantelrohrs 33.

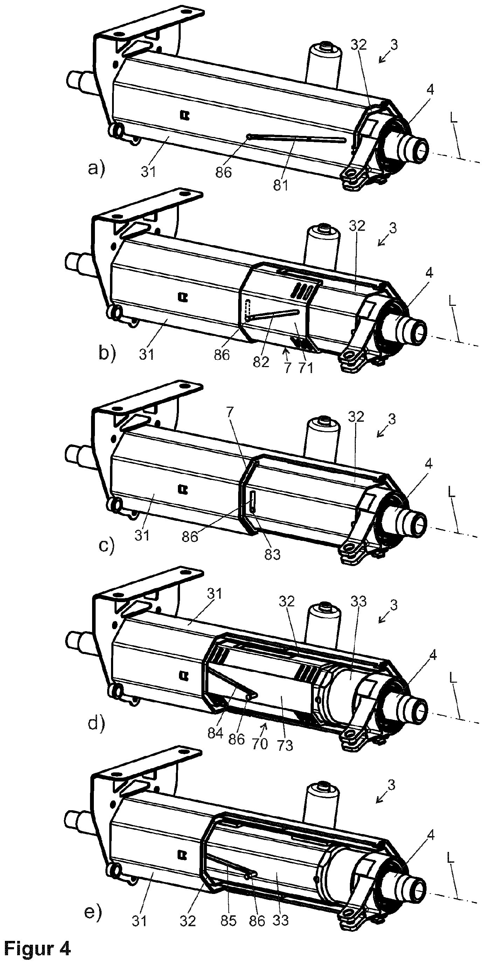

In den Figuren 4a bis 4e ist die Manteleinheit 3 in derselben Perspektive wie in den Figuren 3a bis 3e in zusammen gefahrenem Verstellzustand gezeigt, welcher der Verstauposition entspricht, in der das Innenmantelrohr 33 maximal - in der Zeichnung nach links - in das Zwischenmantelrohr 32 eintaucht, und dieses in dem Außenmantelrohr 31 versenkt ist. Dadurch ist die Manteleinheit 3 und somit die Lenksäule 1 maximal in Längsrichtung verkürzt, so dass das Lenkrad - beispielsweise im autonomen Fahrbetrieb - außerhalb des Bedienbereichs verstaut sein kann.

Beim teleskopierenden Einfahren aus der in Figur 3a - 3e gezeigten Betriebsposition in die in den Figuren 4a - 4e gezeigten Verstauposition werden die Mantelrohre 31, 32, 33 und die Wälzkörperkäfige 71, 73 der Wälzlagereinheiten 7, 70 in Längsrichtung teleskopierend relativ zueinander bewegt, so dass diese auch zusammenfassend als Teleskopelemente 31, 32, 33, 7, 70 bezeichnet werden können, wobei das Zwsichenmantelrohr 32 und die Wälzlagereinheit 7 und 70 Zwischenelemente im Sinne der Erfindung sind.

Eine erfindungsgemäße Positioniereinrichtung 8 weist als langgestreckte Führungsbahnen radial bezüglich der Längsachse L offene, durchgehende Führungsschlitze 81, 82, 83, 84, 85 auf, wobei der Führungsschlitz 81 in dem Außenmantelrohr 31 angeordnet ist, der Führungsschlitz 82 in der Wälzkörperkäfig 71 der Wälzlagereinheit 7, der Führungsschlitz 83 in dem Zwischenmantelrohr 32, der Führungsschlitz 84 in der Wälzkörperkäfig 73 der Wälzlagereinheit 70, und der Führungsschlitz 85 in dem Innenmantelrohr 32. Ein Führungsstift 86 bildet einen Führungskörper, der sämtliche sich durch sämtliche Führungsschlitze 81, 82, 83, 84, 85 erstreckt, d.h. diese in radialer Richtung, quer zur Längsachse L durchsetzt. Dabei ist der Führungsstift 86 in Richtung der Längserstreckung in den Führungsschlitze 81, 82, 83, 84, 85 gleitend verschiebbar gelagert, und dabei radial in den Schlitzöffnungen gehalten und radial gesichert. Der Führungsstift 86 ist damit bezüglich jedem der Teleskopelemente 31, 32, 33, 7, 70 schwimmend gelagert.

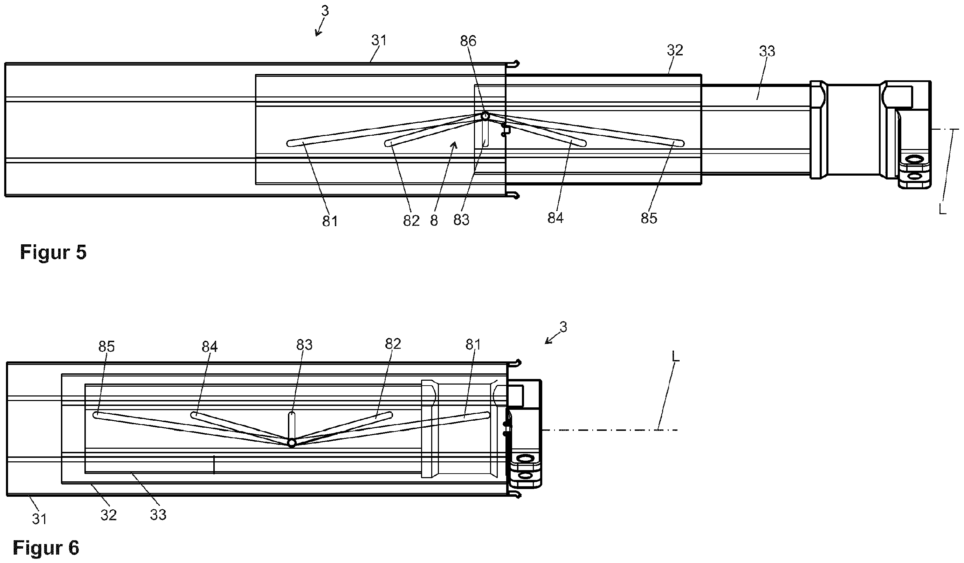

Die Anordnung und Ausrichtung der Führungsschlitze 81, 82, 83, 84, 85 ist in Figur 5 in einem auseinander gezogenen Verstellzustand in einer Betriebsposition schematisch verdeutlicht, wobei die Mantelrohre 31, 32, 33 schematisch durchscheinend dargestellt, und die Wälzlagerkäfige 71, 73 bis auf die darin ausgebildeten Führungsschlitze 82, 84 unsichtbar sind, damit die Übersichtlichkeit aufrecht erhalten werden kann. Figur 6 zeigt in derselben Ansicht die zusammen geschobene Verstauposition.

Der Führungsschlitz 81 ist länger und flacher gegen die Längsachse L geneigt als der Führungsschlitz 82, der wiederum flacher geneigt ist als der denkrecht zur Längsachse L stehende Führungsschlitz 83 in dem Zwischenmantelrohr 32. Die Führungsschlitze 84 und 85 sind relativ zu den Führungsschlitzen 82 und 81 spiegelbildlich, mit umgekehrtem Vorzeichen der Neigung relativ zur Längsachse L angeordnet.

Sämtliche Führungsschlitze 81, 82, 83, 84, 85 schneiden bzw. überlappen sich in einem gemeinsamen Überlagerungsabschnitt, wo sie gemeinsam von dem Führungsstift 86 durchsetzt werden. Der Führungsstift 86 bildet mit jedem der Führungsschlitze 81, 82, 83, 84, 85 eine Kulissenführung. Diese Kulissenführungen sich durch den gemeinsamen Führungsstift 86 miteinander zwangsgekoppelt, d.h. der Führungsstift 86 kann sich nur gleichzeitig relativ zu sämtlichen Führungsschlitzen 81, 82, 83, 84, 85 bewegen. Dadurch sind die Mantelrohre 31, 32, 33 und die Wälzlagereinheiten 7, 70 in Längsrichtung in jeder beim Verstellen durchlaufenen Verstellposition eindeutig relativ zueinander zwangspositioniert. Entsprechend wird eine synchronisierte lineare Bewegung erzeugt.

Wird aus der in Figur 5 gezeigten Betriebsposition das Innenmantelrohr 33 in Richtung auf das Außenmantelrohr 31 zu verstellt, um es in Längsrichtung in die in Figur 6 gezeigte Verstauposition einzufahren, gleitet der Führungsstift 86 in allen Führungsschlitzen 81, 82, 83, 84, 85 entlang, wie in Figur 5 mit den Pfeilen angedeutet. Während der Verstellens ist die relative Positionierung in jeder durchlaufenen Verstellposition eindeutig definiert, bis die Verstauposition erreicht ist, in der der Führungsstift 86 im gezeigten Beispiel am anderen Ende der Führungsschlitze 81, 82, 83, 84, 85 anschlägt.

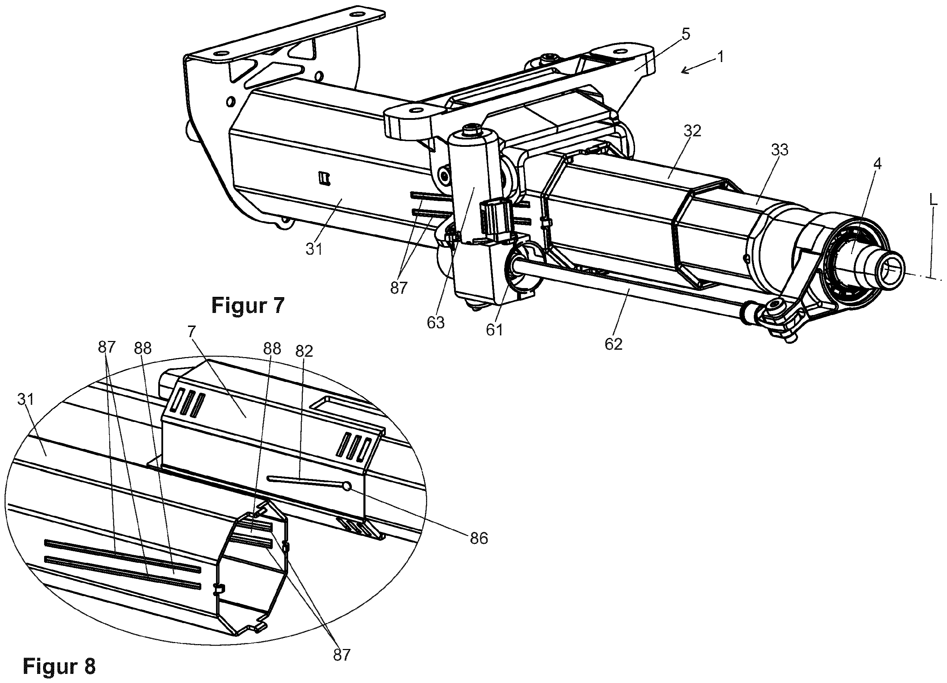

Figuren 7 und 8 zeigen eine abgewandelte Bauform, bei welcher anstelle des Führungsschlitzes 81 innen an dem Außenmantelrohr 31 zwei parallele, nach innen vorstehende Führungsvorsprünge 87 ausgebildet sind, beispielsweise durch angeformte Stege oder eingeformte Sicken, zwischen denen eine langgestreckte Führungsnut 88 als Führungsbahn gebildet wird. In dieser Führungsnut 88 wird der aus dem Führungsschlitz 82 der Wälzlagereinheit 7 radial nach außen vorstehende Führungsstift 86 linear gleitend geführt. Abgesehen davon, dass die Führungsnut 88 keine durchgehende Öffnung hat wie der Führungsschlitz 82 der ersten Ausführung, kann die Ausgestaltung und Funktionsweise identisch bzw. analog zur ersten Ausführung sein.

Weiterhin kann ein motorischer Stellantrieb 60 vorgesehen sein, der ähnlich wie der Stellantrieb 6 als Spindeltrieb ausgebildet sein kann, und zwischen der Manteleinheit 3 und der Trageinheit 5 angeordnet ist, so dass eine Verstellung in Höhenrichtung H ermöglicht ist, wie in Figur 2 erkennbar ist.

In den gezeigten Beispielen sind zwei Positioniereinheiten 8 relativ zur Längsachse L auf gegenüberliegenden Seiten der Manteleinheit 3 angeordnet. Die Führungsschlitze 81, 82, 83, 84, 85, 88 können dabei bezüglich der Längsachse L spiegelbildlich angeordnet sein.

Die erfindungsgemäße Positioniereinrichtung 8 kann auch realisiert sein, wenn keine Wälzlagereinheiten 7, 70 vorgesehen sin, so dass die Mantelrohre 31, 32, 33 direkt teleskopierend ineinander gleiten.

Es ist auch möglich zwischen dem Außenmantelrohr 31 und dem Innenmantelrohr 33 mehr als ein Zwischenmantelrohr 32 anzuordnen, beispielsweise zwei, drei oder mehr. Dabei können dazwischen Wälzlagereinheiten 7 eingesetzt sein.

Anstelle der Wälzlagereinheiten 7, 70 können auch hier nicht dargestellte Gleiteinheiten realisiert sein, welche anstelle der Wälzkörper 72 Gleitkörper aufweisen können, beispielsweise anstelle des Wälzkörperkäfigs 71 eine Gleithülse aus Kunststoff oder dergleichen.

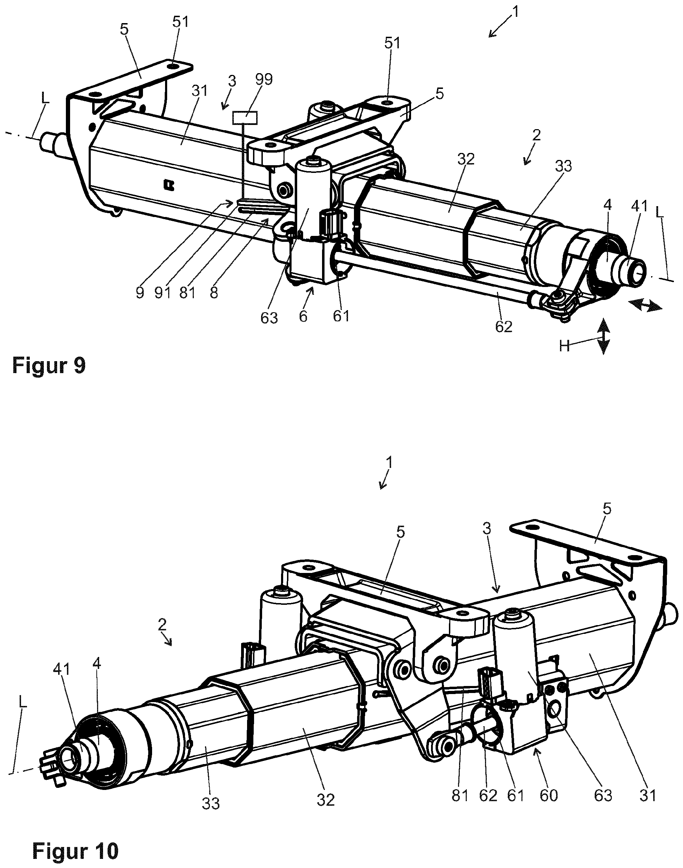

Figuren 9 bis 14 zeigen in denselben Ansichten wie Figuren 1 bis 6 eine erfindungsgemäße Lenksäule in einer zweiten Ausführungsform, wobei für gleichwirkende Teile dieselben Bezugszeichen verwendet werden

Figur 9 zeigt wie Figur 1 eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein Zwischenmantelrohr 32 und ein Innenmantelrohr 33 aufweist, die in Ihrer Gesamtheit als Mantelrohre 31, 32, und 33 bezeichnet werden. Diese sind in Längsrichtung, die der Achsrichtung einer Längsachse L entspricht, teleskopierend verschiebbar, koaxial ineinander angeordnet, wie mit dem Doppelpfeil angedeutet. Dabei bildet das Zwischenmantelrohr 32 ein Zwischenelement im Sinne der Erfindung.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Die Manteleinheit 3 ist in einer zweiteiligen Trageinheit 5 gehalten, welche Befestigungsmittel 51 in Form von Öffnungen zur Anbringung an einer nicht dargestellten Fahrzeugkarosserie aufweist, beispielsweise unter Verwendung von Schrauben oder dergleichen.

Ein Verstellantrieb 6 weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich über den Verstellantrieb 6 in Längsrichtung, die der Achsrichtung der Längsachse L entspricht, an dem Außenmantelrohr 31 ab. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Achsrichtung der Längsachse L in das Außenmantelrohr 31 eingefahren oder ausgefahren wird, wie mit dem Doppelpfeil angedeutet. Dadurch wird eine Längsverstellung realisiert, durch die ein an dem Anschlussabschnitt 41 angebrachtes Lenkrad nach vorn in eine Verstauposition gebracht werden kann, in der das Innenmantelrohr 33 und das Zwischenmantelrohr 32 in dem Außenmantelrohr 31 eingefahren, d.h. nach vorn versenkt sind, oder in eine Bedienposition im Bedienbereich, in der die Mantelrohre 31, 32 und 33 auseinander ausgefahren sind.

Alternativ kann sich die Spindelmutter 61 an dem Innenmantelrohr 33, und die Gewindespindel 62 an dem Außenmantelrohr 31 abstützen.

In Figur 9 ist eine Verstellposition der Lenksäule 1 in einer Bedienstellung gezeigt, bei der das Zwischenmantelrohr 32 und das Innenmantelrohr 33 in Längsrichtung nach hinten bezogen auf die Fahrtrichtung des Kraftfahrzeugs - in der Zeichnung nach rechts - zumindest teilweise aus dem Außenmantelrohr 31 herausgefahren sind, so dass sich ein an dem Anschlussabschnitt 41 angebrachtes Lenkrad im Bedienbereich zur Eingabe von Lenkbefehlen befindet. Figur 10 zeigt denselben Verstellzustand, wobei durch die unterschiedliche Perspektive das Innenmantelrohr nach links herausgezogen ist.

Eine erfindungsgemäße Positionserfassungseinrichtung 9 weist ein Sensorelement 91 auf, welches an dem Außenmantelrohr 31 angebracht ist. Das Sensorelement 91 kann wie dargestellt die Form eines in Längsrichtung langgestreckten Streifens haben. Das Sensorelement 91 ist mit der Auswerteeinrichtung 99 signalübertragend verbunden, beispielsweise mittels eines elektrischen Kabels.

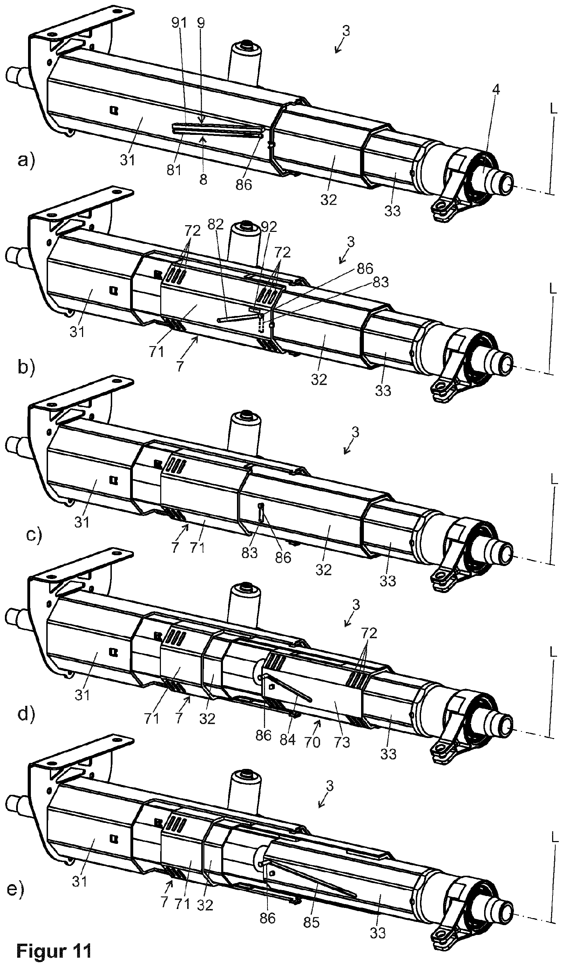

In Figur 11 ist die Manteleinheit 3 zur besseren Übersicht einzeln dargestellt, in der Perspektive und dem Verstellzustand gemäß Figur 9. In den einzelnen Teilfiguren 11a, b, c, d und e sind einzelne Teilabschnitte der Mantelrohre 31, 32, 33 aufgeschnitten und weggelassen und geben einen jeweils weiteren Blick ins Innere der Manteleinheit 3 frei.

In Figur 11b ist das Außenmantelrohr 31 teilweise weggelassen. Darin ist erkennbar, dass koaxial zwischen den Mantelrohren 31 und 32 eine Wälzlagereinheit 7 angeordnet ist, die relativ dazu teleskopierend in Längsrichtung verlagerbar ist und ein Zwischenelement im Sinne der Erfindung darstellt. Die Wälzlagereinheit 7 weist einen hülsenförmigen Wälzkörperkäfig 71 auf, der im gezeigten Beispiel als Rollenkäfig ausgebildet ist, in dem als Wälzkörper jeweils eine Mehrzahl von Rollen 72 jeweils in zur Längsachse L achsparallelen Reihen positioniert, drehbar gehalten sind. Die Rollen 72 rollen außen auf dem Außenmantelrohr 31, also auf einer Innenfläche des Außenmantelrohrs 31, und innen auf dem Zwischenmantelrohr 32, also auf einer Außenfläche des Zwischenmantelrohrs 32, ab, so dass zwischen den Mantelrohren 31 und 32 eine lineare Wälzlagerung in Längsrichtung gebildet ist.

In Figur 11b ist erkennbar, dass an dem Wälzkörperkäfig 71, der ein relativ zu dem Außenmantelrohr 31 teleskopierbares Zwischenelement darstellt, ein Sensorelement 92 angeordnet ist. Dieses Sensorelement 92 korrespondiert mit dem Sensorelement 91 der Positionserfassungsvorrichtung 9. Wird der Wälzkörperkäfig 71 beim Verstellen der Lenksäule 1 in Längsrichtung relativ zum Mantelrohr 31 bewegt, wird das Sensorelement 92 gleichzeitig in Längsrichtung relativ zum Sensorelement 91 bewegt. Dadurch, dass die Sensorelemente 91 und 92 als elektronisches Geber-Nehmer-Paar ausgestaltet sind, beispielsweise für ein kapazitives elektronisches Positionsmessverfahren, kann mittels einer elektronischen Auswertung die relative Positionierung des Wälzkörperkäfigs 71 zum Mantelrohr 31 bestimmt werden. Hierzu sind die Sensorelemente 91 bzw. 92 an eine geeignete, hier nicht dargestellte elektronische Auswerteeinheit angeschlossen. Aus den elektronischen Messwerten der Sensorelemente 91 und 92 wird in der Auswerteeinheit ein Positionsmesswert ermittelt, aus dem ein Längenmesswert berechnet wird. Dieser Längenmesswert korrespondiert mit dem Abstand der Mantelrohre 31 und 33 in Längsrichtung, und kann zur Positionsbestimmung einer an der Lenkspindel 4 angebrachten Lenkeingabe, beispielsweise eines Lenkrads im Fahrzeuginnenraum genutzt werden.

Das langgestreckte Sensorelement 91 kann wie gezeigt in etwa parallel zum Führungsschlitz 81 angeordnet sein, oder in etwa parallel zur Längsachse L. Wesentlich ist dabei nur, dass eine relative Positionsbestimmung in Längsrichtung zwischen dem Wälzkörperkäfig 71 und dem Mantelrohr 31 ermöglicht ist. Es können beispielsweise für die Positionserfassungseinrichtung 9 kommerziell verfügbare Längenmesssysteme eingesetzt werden, wodurch eine kompakte Bauweise und ein zuverlässiger Betrieb gewährleistet sind.

In Figur 11c ist die Wälzlagereinheit 7 teilweise aufgeschnitten und weggelassen und gibt einen Blick frei auf die in Figur 11b von dem Wälzkörperkäfig 71 verdeckte Außenseite des Zwischenmantelrohrs 32 mit dem Führungsschlitz 83.

In Figur 11d ist das Zwischenmantelrohr 32 teilweise weggelassen. Darin ist erkennbar, dass koaxial zwischen den Zwischenmantelrohr 32 und dem Innenmantelrohr 33 eine zweite Wälzlagereinheit 70 angeordnet ist, die im Prinzip wie die Wälzlagereinheit 7 ausgestaltet ist und ein relativ zu den Mantelrohren 32 und 33 teleskopierend in Längsrichtung verlagerbares Zwischenelement im Sinne der Erfindung darstellt. Die Wälzlagereinheit 70 weist einen hülsenförmigen Wälzkörperkäfig 73 auf, in dem als Wälzkörper jeweils eine Mehrzahl von Rollen 72 jeweils in zur Längsachse L achsparallelen Reihen positioniert, drehbar gehalten sind. Die Rollen 72 rollen außen auf dem Zwischenmantelrohr 32, also auf einer Innenfläche des Zwischenmantelrohrs 32, und innen auf dem Innenmantelrohr 33, also auf einer Außenfläche des Innenmantelrohrs 33, ab, so dass zwischen den Mantelrohren 32 und 33 eine lineare Wälzlagerung in Längsrichtung gebildet ist.

In Figur 11e ist die Wälzlagereinheit 70 teilweise weggelassen und gibt einen Blick frei auf die in Figur 11d von dem Wälzkörperkäfig 73 verdeckte Außenseite des Innenmantelrohrs 33.

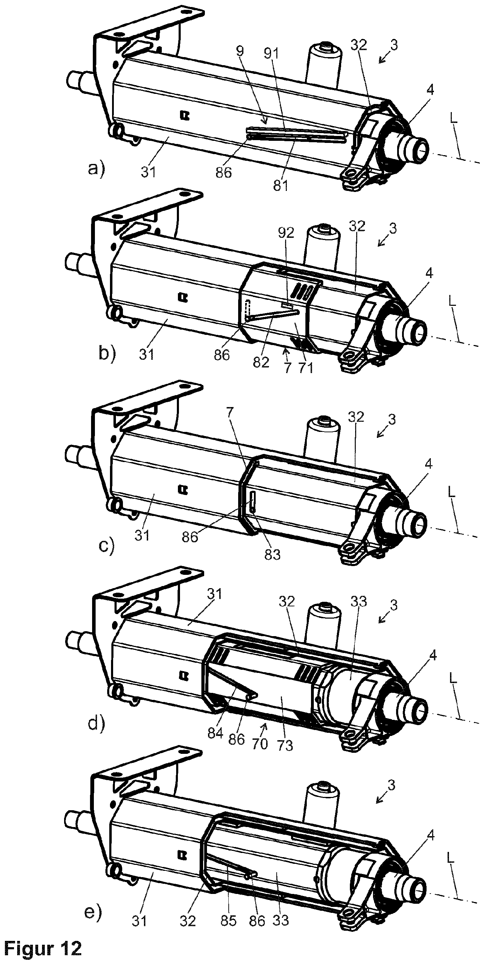

In den Figuren 12a bis 12e ist die Manteleinheit 3 in derselben Perspektive wie in den Figu-ren 11a bis 11e in zusammen gefahrenem Verstellzustand gezeigt, welcher der Verstauposition entspricht, in der das Innenmantelrohr 33 maximal - in der Zeichnung nach links - in das Zwischenmantelrohr 32 eintaucht, und dieses in dem Außenmantelrohr 31 versenkt ist. Dadurch ist die Manteleinheit 3 und somit die Lenksäule 1 maximal in Längsrichtung verkürzt, so dass das Lenkrad - beispielsweise im autonomen Fahrbetrieb - außerhalb des Bedienbereichs verstaut sein kann.

Beim teleskopierenden Einfahren aus der in Figur 11a - 11e gezeigten Betriebsposition in die in den Figuren 12a - 12e gezeigten Verstauposition werden die Mantelrohre 31, 32, 33 und die Wälzkörperkäfige 71, 73 der Wälzlagereinheiten 7, 70 in Längsrichtung teleskopierend relativ zueinander bewegt, so dass diese auch zusammenfassend als Teleskopelemente 31, 32, 33, 7, 70 bezeichnet werden können, wobei das Zwsichenmantelrohr 32 und die Wälzlagereinheit 7 und 70 Zwischenelemente im Sinne der Erfindung sind.

Eine erfindungsgemäße Positioniereinrichtung 8 weist als langgestreckte Führungsbahnen radial bezüglich der Längsachse L offene, durchgehende Führungsschlitze 81, 82, 83, 84, 85 auf, wobei der Führungsschlitz 81 in dem Außenmantelrohr 31 angeordnet ist, der Führungsschlitz 82 in der Wälzkörperkäfig 71 der Wälzlagereinheit 7, der Führungsschlitz 83 in dem Zwischenmantelrohr 32, der Führungsschlitz 84 in der Wälzkörperkäfig 73 der Wälzlagereinheit 70, und der Führungsschlitz 85 in dem Innenmantelrohr 32. Ein Führungsstift 86 bildet einen Führungskörper, der sämtliche sich durch sämtliche Führungsschlitze 81, 82, 83, 84, 85 erstreckt, d.h. diese in radialer Richtung, quer zur Längsachse L durchsetzt. Dabei ist der Führungsstift 86 in Richtung der Längserstreckung in den Führungsschlitze 81, 82, 83, 84, 85 gleitend verschiebbar gelagert, und dabei radial in den Schlitzöffnungen gehalten und radial gesichert. Der Führungsstift 86 ist damit bezüglich jedem der Teleskopelemente 31, 32, 33, 7, 70 schwimmend gelagert.

In einer besonderen Ausführungsform kann das zweite Sensorelement durch den Führungsstift 86 gebildet sein oder mit diesem derart gekoppelt sein, das diese zueinander unverrückbar sind, sprich sich zusammen bewegen.

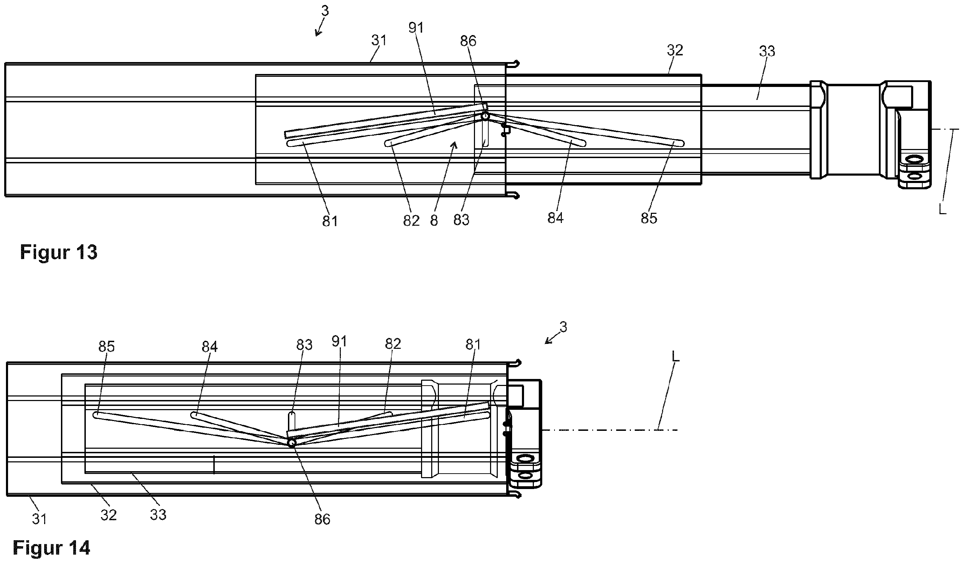

Die Anordnung und Ausrichtung der Führungsschlitze 81, 82, 83, 84, 85 ist in Figur 13 in einem auseinander gezogenen Verstellzustand in einer Betriebsposition schematisch verdeutlicht, wobei die Mantelrohre 31, 32, 33 schematisch durchscheinend dargestellt, und die Wälzlagerkäfige 71, 73 bis auf die darin ausgebildeten Führungsschlitze 82, 84 unsichtbar sind, damit die Übersichtlichkeit aufrecht erhalten werden kann. Figur 14 zeigt in derselben Ansicht die zusammen geschobene Verstauposition.

Der Führungsschlitz 81 ist länger und flacher gegen die Längsachse L geneigt als der Führungsschlitz 82, der wiederum flacher geneigt ist als der denkrecht zur Längsachse L stehende Führungsschlitz 83 in dem Zwischenmantelrohr 32. Die Führungsschlitze 84 und 85 sind relativ zu den Führungsschlitzen 82 und 81 spiegelbildlich, mit umgekehrtem Vorzeichen der Neigung relativ zur Längsachse L angeordnet.

Sämtliche Führungsschlitze 81, 82, 83, 84, 85 schneiden bzw. überlappen sich in einem gemeinsamen Überlagerungsabschnitt, wo sie gemeinsam von dem Führungsstift 86 durchsetzt werden. Der Führungsstift 86 bildet mit jedem der Führungsschlitze 81, 82, 83, 84, 85 eine Kulissenführung. Diese Kulissenführungen sich durch den gemeinsamen Führungsstift 86 miteinander zwangsgekoppelt, d.h. der Führungsstift 86 kann sich nur gleichzeitig relativ zu sämtlichen Führungsschlitzen 81, 82, 83, 84, 85 bewegen. Dadurch sind die Mantelrohre 31, 32, 33 und die Wälzlagereinheiten 7, 70 in Längsrichtung in jeder beim Verstellen durchlaufenen Verstellposition eindeutig relativ zueinander zwangspositioniert. Entsprechend wird eine synchronisierte lineare Bewegung erzeugt.

Wird aus der in Figur 13 gezeigten Betriebsposition das Innenmantelrohr 33 in Richtung auf das Außenmantelrohr 31 zu verstellt, um es in Längsrichtung in die in Figur 14 gezeigte Verstauposition einzufahren, gleitet der Führungsstift 86 in allen Führungsschlitzen 81, 82, 83, 84, 85 entlang, wie in Figur 13 mit den Pfeilen angedeutet. Während der Verstellens ist die relative Positionierung in jeder durchlaufenen Verstellposition eindeutig definiert, bis die Verstauposition erreicht ist, in der der Führungsstift 86 im gezeigten Beispiel am anderen Ende der Führungsschlitze 81, 82, 83, 84, 85 anschlägt.

Anstelle des Führungsschlitzes 81 können innen an dem Außenmantelrohr 31 zwei parallele, nach innen vorstehende Führungsvorsprünge 87 ausgebildet sein, beispielsweise durch angeformte Stege oder eingeformte Sicken, zwischen denen eine langgestreckte Führungsnut 88 als Führungsbahn gebildet wird. In dieser Führungsnut 88 wird der aus dem Führungsschlitz 82 der Wälzlagereinheit 7 radial nach außen vorstehende Führungsstift 86 linear gleitend geführt. Abgesehen davon, dass die Führungsnut 88 keine durchgehende Öffnung hat wie der Führungsschlitz 82 der ersten Ausführung, kann die Ausgestaltung und Funktionsweise identisch bzw. analog zur ersten Ausführung sein.

Weiterhin kann bei allen gezeigten Ausführungen ein motorischer Stellantrieb 60 vorgesehen sein, der ähnlich wie der Stellantrieb 6 als Spindeltrieb ausgebildet sein kann, und zwischen der Manteleinheit 3 und der Trageinheit 5 angeordnet ist, so dass eine Verstellung in Höhenrichtung H ermöglicht ist, wie in Figur 10 erkennbar ist.

In den gezeigten Beispielen sind zwei Positioniereinheiten 8 relativ zur Längsachse L auf gegenüberliegenden Seiten der Manteleinheit 3 angeordnet. Die Führungsschlitze 81, 82, 83, 84, 85, 88 können dabei bezüglich der Längsachse L spiegelbildlich angeordnet sein.

Die erfindungsgemäße Positioniereinrichtung 8 kann auch realisiert sein, wenn keine Wälzlagereinheiten 7, 70 vorgesehen sin, so dass die Mantelrohre 31, 32, 33 direkt teleskopierend ineinander gleiten.

Es ist auch möglich zwischen dem Außenmantelrohr 31 und dem Innenmantelrohr 33 mehr als ein Zwischenmantelrohr 32 anzuordnen, beispielsweise zwei, drei oder mehr. Dabei können dazwischen Wälzlagereinheiten 7 eingesetzt sein.

Anstelle der Wälzlagereinheiten 7, 70 können auch hier nicht dargestellte Gleitlagereinheiten realisiert sein, welche anstelle der Wälzkörper 72 Gleitkörper aufweisen können, beispielsweise anstelle des Wälzkörperkäfigs 71 eine Gleithülse aus Kunststoff oder dergleichen. Alternativ kann eine Gleitlagereinheit auch in etwa geformt sein wie ein Wälzkörperkäfig 11, jedoch ohne Wälzkörper, und als Gleithülse aus einem gut gleitfähigen Material, beispielsweise einem Kunststoff ausgebildet sein.

## Patentansprüche

1. Lenksäule (1) für ein Kraftfahrzeug, umfassend eine Manteleinheit (3), in der eine Lenkspindel (4) um eine in Längsrichtung erstreckte Längsachse (L) drehbar gelagert ist, wobei die Manteleinheit (3) mindestens zwei in Längsrichtung relativ zueinander verstellbare, teleskopartig geführte Mantelrohre (31, 32, 33) aufweist, wobei zwischen den Mantelrohren (31, 32, 33) ein in Längsrichtung verlagerbares Zwischenelement (32, 7, 70) angeordnet ist, und die eine Positioniereinrichtung zur Positionierung des Zwischenelements (32, 7, 70) relativ zu den Mantelrohren (31, 32, 33) in Längsrichtung aufweist,
**dadurch gekennzeichnet,**
**dass** die Positioniereinrichtung (8) langgestreckte Führungsbahnen (81, 82, 83, 84, 85, 88) umfasst, die an den Mantelrohren (31, 32, 33) und dem Zwischenelement (31, 32, 33) angeordnet sind und derart miteinander zusammenwirken, dass diese die Mantelrohre (31, 32, 33) und das Zwischenelement (32, 7, 70) relativ zueinander definiert positionieren.

2. Lenksäule (1) nach Anspruch 1, **dadurch gekennzeichnet, dass** die Führungsbahnen (81, 82, 83, 84, 85, 88) relativ zueinander und relativ zur Längsachse (L) geneigt verlaufen.

3. Lenksäule (1) nach Anspruch 1 oder 2, **dadurch gekennzeichnet, dass** an den Führungsbahnen (81, 82, 83, 84, 85, 88) mindestens ein Führungskörper (86) derart geführt ist, so dass er die Mantelrohre (31, 32, 33) und das Zwischenelement (32, 7, 70) relativ zueinander definiert positioniert.

4. Lenksäule (1) nach einem der vorangehenden Ansprüche, **dadurch gekennzeichnet, dass** die Führungsbahnen (81, 82, 83, 84, 85, 88) Führungsvertiefungen (81, 82, 83, 84, 85, 88) oder Führungsvorsprünge (87) umfassen.

5. Lenksäule (1) nach Anspruch 3, **dadurch gekennzeichnet, dass** die Führungsbahnen (81, 82, 83, 84, 85, 88) Führungsschlitze (81, 82, 83, 84, 85) aufweisen, durch die sich der Führungskörper (86) quer zur Längsachse (L) hindurch erstreckt.

6. Lenksäule (1) nach Anspruch 5, **dadurch gekennzeichnet, dass** der Führungskörper (86) in den Führungsschlitzen (81, 82, 83, 84, 85) schwimmend gelagert ist.

7. Lenksäule (1) nach einem der vorangehenden Ansprüche 3, 5 oder 6, **dadurch gekennzeichnet, dass** sich die Führungsbahnen (81, 82, 83, 84, 85, 88) in einem Überlagerungsabschnitt schneiden, wobei der Führungskörper (86) im Überlagerungsabschnitt angeordnet ist.

8. Lenksäule (1) nach einem der vorangehenden Ansprüche 3 oder 5 bis 7, **dadurch gekennzeichnet, dass** der Führungskörper (86) in Längsrichtung unverlagerbar an einem Mantelrohr (32) oder einem Zwischenelement (32, 7, 70) gehalten ist.

9. Lenksäule (1) nach Anspruch 6, **dadurch gekennzeichnet, dass** der Führungskörper (86) quer zur Längsrichtung bewegbar gelagert ist.

10. Lenksäule (1) nach einem der vorangehenden Ansprüche, **dadurch gekennzeichnet, dass** mindestens zwei Führungsbahnen (81, 82, 83, 84, 85, 88) über den Umfang verteilt angeordnet sind.

11. Lenksäule (1) nach einem der vorangehenden Ansprüche, **dadurch gekennzeichnet, dass** das Zwischenelement (32, 7, 70) ein koaxiales, relativ zu den Mantelrohren teleskopierbare Wälzlagereinheit (7, 70) oder Gleiteinheit aufweist.

12. Lenksäule (1) nach einem der vorangehenden Ansprüche, **dadurch gekennzeichnet, dass** das Zwischenelement ein Zwischenmantelrohr (32) aufweist.

13. Lenksäule (1) für ein Kraftfahrzeug, umfassend eine Manteleinheit (3), in der eine Lenkspindel (4) um eine in Längsrichtung erstreckte Längsachse (L) drehbar gelagert ist, wobei die Manteleinheit (3) mindestens zwei in Längsrichtung relativ zueinander verstellbare, teleskopartig geführte Mantelrohre (31, 33) aufweist, wobei zwischen den Mantelrohren (31, 33) mindestens ein in Längsrichtung verlagerbares Zwischenelement (32, 7, 70) angeordnet ist, und umfassend eine Positionserfassungseinrichtung (9) zur Erfassung der relativen Position der Mantelrohre (31, 33),
**dadurch gekennzeichnet,**
**dass** an den Mantelrohren (31, 33) und dem Zwischenelement (32, 7, 70) eine Positioniereinrichtung (8) angeordnet ist und derart mit diesen zusammenwirkt, dass die Mantelrohre (31, 33) und das Zwischenelement (32, 7, 70) relativ zueinander definiert positioniert werden, wobei von der Positionserfassungseinrichtung (9) die relative Position des Zwischenelements (32, 7, 70) zu einem Mantelrohr (31, 33) oder einem weiteren Zwischenelement (32, 7, 70) erfassbar ist.

14. Verfahren zur Messung des Verstellzustands einer Lenksäule (1) für ein Kraftfahrzeug, umfassend eine Manteleinheit (3), in der eine Lenkspindel (4) um eine in Längsrichtung erstreckte Längsachse (L) drehbar gelagert ist, wobei die Manteleinheit (3) mindestens zwei in Längsrichtung relativ zueinander verstellbare, teleskopartig geführte Mantelrohre (31, 33) aufweist, wobei zwischen den Mantelrohren (31, 33) mindestens ein in Längsrichtung verlagerbares Zwischenelement (32, 7, 70) angeordnet ist, wobei aus der relativen Position der Mantelrohre (31, 33) ein mit dem Verstellzustand korrelierter Längenmesswert bestimmt wird,
**dadurch gekennzeichnet,**
**dass** die Mantelrohre (31, 33) und das Zwischenelement (32, 7, 70) relativ zueinander definiert positioniert werden, und
**dass** die relative Position des Zwischenelements (32, 7, 70) zu einem Mantelrohr (31, 33) oder einem weiteren Zwischenelement (32, 7, 70) von der Positionserfassungseinrichtung (9) als Positionsmesswert gemessen wird, und
**dass** aus dem gemessenen Positionsmesswert ein Längenmesswert berechnet wird.

## Claims

1. Steering column (1) for a motor vehicle, comprising a casing unit (3) in which a steering spindle (4) is mounted rotatably about a longitudinal axis (L) extending in the longitudinal direction, wherein the casing unit (3) has at least two casing tubes (31, 32, 33) which are adjustable relative to one another in the longitudinal direction and are guided telescopically, wherein an intermediate element (32, 7, 70) which is displaceable in the longitudinal direction is arranged between the casing tubes (31, 32, 33), and which has a positioning device for positioning the intermediate element (32, 7, 70), 32, 33), wherein an intermediate element (32, 7, 70) which is displaceable in the longitudinal direction is arranged between the casing tubes (31, 32, 33), and which has a positioning device for positioning the intermediate element (32, 7, 70) relative to the casing tubes (31, 32, 33) in the longitudinal direction,
**characterised in**
**in that** the positioning device (8) comprises elongate guide tracks (81, 82, 83, 84, 85, 88) which are arranged on the casing tubes (31, 32, 33) and the intermediate element (31, 32, 33) and co-operate with one another in such a way that they position the casing tubes (31, 32, 33) and the intermediate element (32, 7, 70) in a defined manner relative to one another.

2. Steering column (1) according to claim 1, **characterised in that** the guide tracks (81, 82, 83, 84, 85, 88) are inclined relative to each other and relative to the longitudinal axis (L).

3. Steering column (1) according to claim 1 or 2, **characterised in that** at least one guide body (86) is guided on the guide tracks (81, 82, 83, 84, 85, 88) in such a way that it positions the casing tubes (31, 32, 33) and the intermediate element (32, 7, 70) in a defined manner relative to one another.

4. Steering column (1) according to one of the preceding claims, **characterised in that** the guide tracks (81, 82, 83, 84, 85, 88) comprise guide recesses (81, 82, 83, 84, 85, 88) or guide projections (87).

5. Steering column (1) according to claim 3, **characterised in that** the guide tracks (81, 82, 83, 84, 85, 88) have guide slots (81, 82, 83, 84, 85) through which the guide body (86) extends transversely to the longitudinal axis (L).

6. Steering column (1) according to claim 5, **characterised in that** the guide body (86) is floatingly mounted in the guide slots (81, 82, 83, 84, 85).

7. Steering column (1) according to one of the preceding claims 3, 5 or 6, **characterised in that** the guide tracks (81, 82, 83, 84, 85, 88) intersect in an overlapping section, the guide body (86) being arranged in the overlapping section.

8. Steering column (1) according to one of the preceding claims 3 or 5 to 7, **characterised in that** the guide body (86) is held non-displaceably in the longitudinal direction on a casing tube (32) or an intermediate element (32, 7, 70).

9. Steering column (1) according to claim 6, **characterised in that** the guide body (86) is mounted so as to be movable transversely to the longitudinal direction.

10. Steering column (1) according to one of the preceding claims, **characterised in that** at least two guide tracks (81, 82, 83, 84, 85, 88) are arranged distributed over the circumference.

11. Steering column (1) according to one of the preceding claims, **characterised in that** the intermediate element (32, 7, 70) has a coaxial rolling bearing unit (7, 70) or sliding unit which can be telescoped relative to the casing tubes.

12. Steering column (1) according to one of the preceding claims, **characterised in that** the intermediate element has an intermediate casing tube (32).

13. Steering column (1) for a motor vehicle, comprising a casing unit (3) in which a steering spindle (4) is mounted rotatably about a longitudinal axis (L) extending in the longitudinal direction, wherein the casing unit (3) has at least two casing tubes (31, 33) which are adjustable relative to one another in the longitudinal direction and are guided telescopically, and comprising at least one intermediate element (32, 7, 70) which is displaceable in the longitudinal direction, wherein at least one intermediate element (32, 7, 70) displaceable in the longitudinal direction is arranged between the casing tubes (31, 33), and comprising a position detecting device (9) for detecting the relative position of the casing tubes (31, 33),
**characterised in**
**that** a positioning device (8) is arranged on the casing tubes (31, 33) and the intermediate element (32, 7, 70) and co-operates with these in such a way that the casing tubes (31, 33) and the intermediate element (32, 7, 70) are positioned in a defined manner relative to one another, wherein the relative position of the intermediate element (32, 7, 70) to a casing tube (31, 33) or a further intermediate element (32, 7, 70) can be detected by the position detecting device (9).

14. Method for measuring the adjustment state of a steering column (1) for a motor vehicle, comprising a casing unit (3) in which a steering spindle (4) is mounted rotatably about a longitudinal axis (L) extending in the longitudinal direction, the casing unit (3) having at least two casing tubes (31, 33) which are adjustable relative to one another in the longitudinal direction and are guided telescopically, wherein at least one intermediate element (32, 7, 70) which is displaceable in the longitudinal direction is arranged between the casing tubes (31, 33), wherein at least one intermediate element (32, 7, 70) displaceable in the longitudinal direction is arranged between the casing tubes (31, 33), wherein a length measurement value correlated with the displacement state is determined from the relative position of the casing tubes (31, 33),
**characterised in that**
**in that** the casing tubes (31, 33) and the intermediate element (32, 7, 70) are positioned in a defined manner relative to one another, and **in**
**that** the relative position of the intermediate element (32, 7, 70) to a casing tube (31, 33) or a further intermediate element (32, 7, 70) is measured as a measured position value by the position detection device (9), and **in**
**that** a measured length value is calculated from the measured position value.

## Revendications

1. Colonne de direction (1) pour un véhicule automobile, comprenant une unité d'enveloppe (3) dans laquelle un arbre de direction (4) est monté à rotation autour d'un axe longitudinal (L) s'étendant dans la direction longitudinale, l'unité d'enveloppe (3) comprenant au moins deux tubes d'enveloppe (31, 32, 33), un élément intermédiaire (32, 7, 70) déplaçable dans la direction longitudinale étant disposé entre les tubes d'enveloppe (31, 32, 33), et qui présente un dispositif de positionnement pour positionner l'élément intermédiaire (32, 7, 70) par rapport aux tubes d'enveloppe (31, 32, 33) dans la direction longitudinale,
**caractérisé en ce que**
que le dispositif de positionnement (8) comprend des glissières de guidage (81, 82, 83, 84, 85, 88) allongées qui sont disposées sur les tubes d'enveloppe (31, 32, 33) et l'élément intermédiaire (31, 32, 33) et qui coopèrent entre elles de telle sorte que celles-ci positionnent de manière définie les tubes d'enveloppe (31, 32, 33) et l'élément intermédiaire (32, 7, 70) les uns par rapport aux autres.

2. Colonne de direction (1) selon la revendication 1, **caractérisée en ce que** les glissières (81, 82, 83, 84, 85, 88) sont inclinées les unes par rapport aux autres et par rapport à l'axe longitudinal (L).

3. Colonne de direction (1) selon la revendication 1 ou 2, **caractérisée en ce qu'**au moins un corps de guidage (86) est guidé sur les glissières de guidage (81, 82, 83, 84, 85, 88) de telle sorte qu'il positionne de manière définie les tubes d'enveloppe (31, 32, 33) et l'élément intermédiaire (32, 7, 70) les uns par rapport aux autres.

4. Colonne de direction (1) selon l'une des revendications précédentes, **caractérisée en ce que** les glissières (81, 82, 83, 84, 85, 88) comprennent des creux de guidage (81, 82, 83, 84, 85, 88) ou des saillies de guidage (87).

5. Colonne de direction (1) selon la revendication 3, **caractérisée en ce que** les glissières de guidage (81, 82, 83, 84, 85, 88) présentent des fentes de guidage (81, 82, 83, 84, 85) à travers lesquelles le corps de guidage (86) s'étend transversalement à l'axe longitudinal (L).

6. Colonne de direction (1) selon la revendication 5, **caractérisée en ce que** le corps de guidage (86) est monté flottant dans les fentes de guidage (81, 82, 83, 84, 85).

7. Colonne de direction (1) selon l'une des revendications précédentes 3, 5 ou 6, **caractérisée en ce que** les pistes de guidage (81, 82, 83, 84, 85, 88) se coupent dans une section de superposition, le corps de guidage (86) étant disposé dans la section de superposition.

8. Colonne de direction (1) selon l'une des revendications précédentes 3 ou 5 à 7, **caractérisée en ce que** le corps de guidage (86) est maintenu de manière non déplaçable dans la direction longitudinale sur un tube d'enveloppe (32) ou un élément intermédiaire (32, 7, 70).

9. Colonne de direction (1) selon la revendication 6, **caractérisée en ce que** le corps de guidage (86) est monté mobile transversalement à la direction longitudinale.

10. Colonne de direction (1) selon l'une des revendications précédentes, **caractérisée en ce qu'**au moins deux glissières de guidage (81, 82, 83, 84, 85, 88) sont réparties sur la circonférence.

11. Colonne de direction (1) selon l'une des revendications précédentes, **caractérisée en ce que** l'élément intermédiaire (32, 7, 70) comprend une unité de palier à roulement (7, 70) ou une unité de glissement coaxiale, télescopique par rapport aux tubes de l'enveloppe.

12. Colonne de direction (1) selon l'une des revendications précédentes, **caractérisée en ce que** l'élément intermédiaire comprend un tube d'enveloppe intermédiaire (32).

13. Colonne de direction (1) pour un véhicule automobile, comprenant une unité d'enveloppe (3) dans laquelle un arbre de direction (4) est monté de manière à pouvoir tourner autour d'un axe longitudinal (L) s'étendant dans la direction longitudinale, l'unité d'enveloppe (3) comprenant au moins deux éléments télescopiques réglables l'un par rapport à l'autre dans la direction longitudinale, tubes d'enveloppe (31, 33) guidés de manière télescopique, au moins un élément intermédiaire (32, 7, 70) déplaçable dans la direction longitudinale étant disposé entre les tubes d'enveloppe (31, 33), et comprenant un dispositif de détection de position (9) pour détecter la position relative des tubes d'enveloppe (31, 33),
**caractérisé en ce que**
qu'un dispositif de positionnement (8) est disposé sur les tubes d'enveloppe (31, 33) et l'élément intermédiaire (32, 7, 70) et coopère avec ceux-ci de telle sorte que les tubes d'enveloppe (31, 33) et l'élément intermédiaire (32, 7, 70) sont positionnés de manière définie les uns par rapport aux autres, la position relative de l'élément intermédiaire (32, 7, 70) par rapport à un tube d'enveloppe (31, 33) ou à un autre élément intermédiaire (32, 7, 70) pouvant être détectée par le dispositif de détection de position (9).

14. Procédé de mesure de l'état de réglage d'une colonne de direction (1) pour un véhicule automobile, comprenant une unité d'enveloppe (3) dans laquelle un arbre de direction (4) est monté à rotation autour d'un axe longitudinal (L) s'étendant dans la direction longitudinale, l'unité d'enveloppe (3) comprenant au moins deux éléments télescopiques réglables l'un par rapport à l'autre dans la direction longitudinale, tubes d'enveloppe (31, 33) guidés de manière télescopique, au moins un élément intermédiaire (32, 7, 70) déplaçable dans la direction longitudinale étant disposé entre les tubes d'enveloppe (31, 33), une valeur de mesure de longueur corrélée avec l'état de réglage étant déterminée à partir de la position relative des tubes d'enveloppe (31, 33),
**caractérisé en ce que**
**en ce que** les tubes d'enveloppe (31, 33) et l'élément intermédiaire (32, 7, 70) sont positionnés de manière définie l'un par
rapport à l'autre, et
**en ce que** la position relative de l'élément intermédiaire (32, 7, 70) par rapport à un tube d'enveloppe (31, 33) ou à un autre élément intermédiaire (32, 7, 70) est mesurée par le dispositif de détection de position (9) comme valeur de mesure de position, et **en**
**ce qu'**une valeur de mesure de longueur est calculée à partir de la valeur de mesure de position mesurée.
